# EUROPÄISCHE PATENTSCHRIFT

(11) **EP 3 281 245 B1**
(45) Veröffentlichungstag und Bekanntmachung des Hinweises auf die Patenterteilung: **25.12.2019**
(21) Anmeldenummer: 15744472.0
(22) Anmeldetag: 08.04.2015
(51) Int. Cl.: H01M 8/18, C25B 1/04

(54) **WÄRMEMANAGEMENTVERFAHREN EINER HOCHTEMPERATUR-WASSERDAMPF-ELEKTROLYSE ODER REVERSIBLEN HOCHTEMPERATUR-BRENNSTOFFZELLE SOWIE HOCHTEMPERATUR-WASSERDAMPF-ELEKTROLYSE- ODER REVERSIBLE HOCHTEMPERATUR-BRENNSTOFFZELLEN-ANORDNUNG**
HIGH TEMPERATURE STEAM ELECTROLYSIS ARRANGEMENT OR REVERSIBLE HIGH TEMPERATURE SOLID OXIDE FUEL CELL AND THERMAL MANAGEMENT THEREOF
DISPOSITIF D'ELECTROLYSE À HAUTE TEMPÉRATURE À VAPEUR OU PILE À COMBUSTIBLE REVERSIBLE EN OXIDE SOLIDE ET SON MANAGEMENT THERMIQUE

(43) Veröffentlichungstag der Anmeldung: 14.02.2018
(73) Patentinhaber: SunFire GmbH, 01237 Dresden (DE)
(72) Erfinder: RÜGER, Dietmar, 01728 Bannewitz (DE); BRABANDT, Jörg, 01277 Dresden (DE); POSDZIECH, Oliver, 01109 Dresden (DE)
(74) Vertreter: Hansen, Jochen
(86) Internationale Anmeldenummer: PCT/DE2015/100149
(87) Internationale Veröffentlichungsnummer: WO 2016/161999

(56) Entgegenhaltungen:
- DE-A1-102006 035 893
- GB-A- 2 515 195
- US-A1- 2004 081 859
- US-A1- 2009 139 874
- US-B1- 7 233 079

## Beschreibung

Die Erfindung betrifft ein Wärmemanagementverfahren einer Hochtemperatur-Wasserdampf-Elektrolyse [Solid Oxide Electrolysis Cell, SOEC], Festoxidbrennstoffzellen [Solid Oxide Fuel Cell, SOFC] mit Hochtemperatur-Wasserdampf-Elektrolyse [SOEC] und/oder reversible Hochtemperatur-Brennstoffzelle mit den Betriebsmodi SOEC und SOFC [reversible Oxide Fuel cell, rSOC], wobei benötigter Wasserdampf aus wenigstens einer externen Quelle zugeführt wird und wenigstens ein Abgasstrom nach der Zelle [SOEC, SOFC, rSOC] wenigstens einmal gekühlt wird.

Ferner betrifft die Erfindung Hochtemperatur-Wasserdampf-Elektrolyse [SOEC], Festoxidbrennstoffzelle [SOFC] mit Hochtemperatur-Wasserdampf-Elektrolyse [SOEC] und/oder reversible Hochtemperatur-Brennstoffzelle [rSOC]-anordnung.

Im **Stand der Technik** wird eine Hochtemperatur-Wasserdampf-Elektrolyse (SOEC) mit Wasserdampf betrieben, der mit Hilfe von externer Elektroenergie in Wasserstoff und Sauerstoff zerlegt wird. Der Vorteil der Wasserdampfelektrolyse ist, dass diese im Vergleich zur konventionellen Wasserelektrolyse mit weniger Elektroenergie auskommt, da im Elektrolyseprozess der Energieaufwand für die Verdampfung des Wassers nicht durch Elektroenergie aufgebracht werden muss.

Die Versorgung einer SOEC mit Wasserdampf erfolgt in der Regel aus externen Quellen, wie bspw. aus der Siedewasserkühlung von Syntheseprozessen, wie diese in einer Fischer-Tropsch-Synthese, einer Methansynthese oder einer anderen Kohlenwasserstoffsynthese erfolgen, oder anderen exothermen Prozessen.

Aufgrund von unterschiedlichen Lastzuständen zwischen Dampferzeugung und Dampfverbrauch in der Elektrolyse kommt es jedoch zu einem Überangebot bzw. Dampfmangel in der Elektrolyse, die von diskontinuierlich arbeitenden Syntheseprozessen bspw. in Abhängigkeit der Verfügbarkeit von regenerativ erzeugter Elektrizität über Sonnenenergie oder Windenergie herrührt.

Um eine SOEC bei atmosphärischen oder erhöhten Drücken zu betreiben, ist ein entsprechender Druck im eingesetzten Wasserdampf erforderlich. Das bedeutet, dass die direkte Nutzung von Wärmequellen zur Erzeugung des eingesetzten Dampfes mit einer Temperatur von <100 °C nicht möglich erscheint.

Eine reversible Hochtemperatur-Brennstoffzelle (rSOC) erzeugt im Brennstoffzellenbetrieb (SOFC-Betrieb - Festoxidbrennstoffzelle) aus Wasserstoff und Luft Elektroenergie. Es wurde diesbezüglich diesseits erkannt, dass nach der Nutzung der Abgaswärme aus der Brennstoffzelle für die Vorheizung des Wasserstoffs und der Luft eine hohe Wärmemenge im Abgasstrom verbleibt, die, wenn keine externe Wärmenutzung vorhanden ist, ungenutzt an die Atmosphäre abgegeben wird. Im Elektrolysebetrieb (SOEC-Betrieb) der rSOC wird aus Wasserdampf und Elektroenergie Wasserstoff und Sauerstoff erzeugt, wobei erkannt wurde, dass auch hier nach interner Wärmenutzung noch eine relativ große Wärmemenge im O₂-Abgasstrom verbleibt, die ungenutzt an die Umgebung abgegeben wird.

Die Wasserdampfversorgung für den Elektrolysebetrieb einer SOEC, insbesondere rSOC erfolgt bisher aus externen Quellen z.B. durch Kopplung der SOEC, insbesondere rSOC mit exothermen Syntheseprozessen. Der Wasserstoff für den Brennstoffzellenbetrieb einer SOFC, insbesondere der rSOC stammt entweder aus externen Quellen, wird im Prozess selbst durch Reformierung von Kohlenwasserstoffen hergestellt, die wiederum aus externen Quellen stammen, oder kann im Elektrolysebetrieb der rSOC bzw. einer SOEC erzeugt und in geeigneten Speichern, wie Druckspeicher oder Erdgasnetz für den nachfolgenden Brennstoffzellenbetrieb zwischengepuffert werden.

Aus der Druckschrift US 2004/0081859 A1 ist ein System mit einer regenerierbaren Fest-Oxid-Brennstoffzelle (SORFC) bekannt, bei dem Abwärme von der Brennstoffzelle während des Entlademodus in einem Wärmespeichermaterial gespeichert wird und diese Wärme im Weiteren verwendet wird, um während des Lademodus zu elektrolysierendes Wasser zu erwärmen.

Weiter sind aus der Druckschrift US 2009/0139874 A1 ein System und ein Verfahren zur Herstellung von Wasserstoff bekannt, wobei das System eine unabhängige Hochtemperaturwärmequelle mit einer Festoxidelektrolysezelle und einem Wärmetauscher, der zwischen dem Kathodeneinlass und dem Kathodenauslass angeordnet ist, kombiniert und wobei Wärme von den molekularen Komponenten, wie Wasserstoff, der aus der Elektrolyse stammt, zu extrahieren. Weiter wird ein Teil des in der Festoxidelektrolysezelle erzeugten Wasserstoffs mit Dampf rekombiniert und in die Festoxidelektrolysezelle zurückgeführt.

Ferner offenbart die Druckschrift GB 2 515 195 A ein intermediate-temperature - Festoxidbrennstoffzellen (IT-SOFC) -System, wobei zum Reformieren eines Kohlenwasserstoffbrennstoffs ein Reformerwärmetauscher vorgesehen ist. Die seitens der Anmelderin erkannten **Probleme im Stand der Technik** sind im Wesentlichen:

### Probleme der SOEC:

Die Wasserdampfversorgung der SOEC, insbesondere auf Grund ihres Lastverhaltens, ist von der Verfügbarkeit von externem Wasserdampf aus einer an der SOEC angeordneten Syntheseeinrichtung abhängig. In Zeiten von hohem Wasserdampfbedarf der SOEC kann es vorkommen, dass durch die mit der SOEC gekoppelten Syntheseanordnung kein oder nur unzureichende Mengen an Wasserdampf geliefert werden.

Ferner wird im Stand der Technik die nichtgenutzte Restwärme aus dem SOEC-Prozess nicht für die Senkung des externen Wasserdampfbedarfes genutzt, so dass hier ausschließlich extern erzeugter Wasserdampf zur Verfügung steht und die interne SOEC-Restwärmemengen ungenutzt verbleiben. Diesbezüglich wurde ferner festgestellt, dass Niedertemperaturwärmemengen (Temperaturen unter 100 °C) für die Dampfversorgung innerhalb einer SOEC nicht nutzbar sind.

### Probleme der SOFC:

Eine Regelung nach der tatsächlich benötigten Temperatur, also die Vorwärmtemperatur, für die zuzuführenden Gase, nämlich Luft und Wasserstoff, kann nicht durchgeführt werden, so dass hier nur eine rudimentäre Regelung mit erheblichen Ungewissheiten im Stand der Technik erfolgen kann, was wiederum zu einer möglichen Beschädigung der SOFC Zelle (Stack) führen kann. Es besteht das Risiko, dass bei schnellen Lastwechseln aufgrund unzulässig hoher Temperaturen Thermospannungen innerhalb der Brennstoffzellen entstehen und so diese zerstört werden können.

### Probleme der rSOC:

Die rSOC ist sowohl in der Verfügbarkeit als auch im Lastverhalten von der externen Dampfversorgung abhängig.

Die Restwärme aus dem SOEC-Modus einer rSOC wird nicht für die Senkung des externen Wasserdampfbedarfes genutzt und wird ungenutzt abgegeben.

Eine Nutzung der Niedertemperaturwärme erfolgt nicht, insbesondere wird die Niedertemperaturwärme auch nicht für die Dampfversorgung genutzt.

Die Restwärme aus dem SOFC-Modus der rSOC wird nicht zur Dampfversorgung im SOEC-Modus genutzt, so dass hier erhebliche ungenutzte Wärmemengen nicht synergetisch genutzt werden, um von einer externen Wasserdampfversorgung unabhängig, zumindest jedoch unabhängiger zu werden.

Die Wasserstofferzeugung im SOEC-Modus der rSOC wird nicht für die Wasserstoffversorgung im SOFC-Modus genutzt, sondern es wird lediglich extern zugeführter Wasserstoff im Stand der Technik verbraucht.

Insgesamt ergibt sich daher die Unmöglichkeit der Unabhängigkeit von einer externen Wasserdampf- und Wasserstoffversorgung für eine rSOC im Stand der Technik. Diese nicht bestehende Unabhängigkeit stellt daher ein großes Problem für die rSOC dar.

Ferner wurde erkannt, dass die Vorwärmtemperatur für die notwendigen Gase, nämlich Luft und Wasserstoff, im SOFC-Modus der rSOC ebenfalls im Stand der Technik nicht temperaturgenau geregelt werden können, wodurch auch hier bei der rSOC im SOFC-Modus das Risiko besteht, dass bei schnellen Lastwechseln aufgrund unzulässig hoher Thermospannungen Brennstoffzellen zerstört werden.

Der vorliegenden Erfindung liegt die **Aufgabe** zugrunde, die seitens der Anmelderin erkannten und zuvor aufgeführten Probleme des Standes der Technik zu überwinden und insbesondere interne nicht genutzte oder nicht nutzbar erscheinende Wärmemengen, die im Stand der Technik an externe Verbraucher und/ oder an die Umwelt ungenutzt abgegeben werden, für die interne Versorgung einer SOEC, SOFC und/oder einer rSOC nutzbar zu machen.

**Gelöst** wird diese Aufgabe mit einem Wärmemanagementverfahren gemäß Hauptanspruch sowie einer Hochtemperatur-Wasserdampf-Elektrolyse [SOEC], Festoxidbrennstoffzelle [SOFC] mit Hochtemperatur-Wasserdampf-Elektrolyse [SOEC] und/oder reversible Hochtemperatur-Brennstoffzelle mit den Betriebsmodi SOEC und SOFC [rSOC]-anordnung gemäß nebengeordnetem Anspruch.

Ein internes Erzeugen von benötigtem Wasserdampf erfolgt durch internes rekuperatives Erwärmen und Verdampfen von extern zugeführtem Wasser, wobei hierzu die Energie aus der wenigstens einen Kühlung des wenigstens einen zu kühlenden Abgasstromes verwendet wird, und dabei die externe Dampfzuführung reduziert oder abgeschaltet wird.

Der intern im Betriebsmodus SOFC einer rSOC rekuperativ erzeugte Wasserdampf kann, bevorzugt in einem Ruthsspeicher, gespeichert und zeitversetzt im Prozessmodus SOEC wieder genutzt werden. Gleiches gilt für eine entsprechende Kombinationsanlage aus einem SOFC-Anlagenteil und einem SOEC-Anlagenteil, die miteinander kombiniert werden.

Durch den Einsatz eines Ruthsspeichers bei der Versorgung einer SOEC mit Dampf aus externen Quellen können zeitliche Differenzen zwischen Dampfbereitstellung und Dampfnutzung ausgeglichen werden, die auf unterschiedliches Lastverhalten der Dampferzeugung und der Dampfnutzung zurückzuführen sind. Bisher führten solche Abweichungen dazu, dass überschüssiger Dampf nicht genutzt bzw. bei Dampfmangel die Elektrolyse die notwendige Wasserstoffleistung nicht liefern konnte.

Durch die Nutzung der Abwärme aus einer SOEC oder aus dem Betriebsmodus SOEC einer rSOC zur Dampferzeugung und Nutzung dieses Dampfes in der Elektrolyse sinkt der Dampfbedarf der Elektrolyse. Bisher wurde die nicht genutzte Abgaswärme an die Umgebung abgegeben. Der beim SOEC-Prozess intern rekuperativ erzeugte Wasserdampf kann unmittelbar im Prozessmodi SOEC genutzt werden.

Wärme wird aus einem Luft-Sauerstoff-Abgasstrom und/oder aus einem Wasserstoff-Wasserdampf- Abgasstrom und/oder Luft-Stickstoff-Abgasstrom, bevorzugt aus allen Abgasströmen, rekuperativ zur Wasserdampferzeugung genutzt.

Durch die Nutzung der verfügbaren Abwärmeströme einer rSOC im Brennstoffzellen- und Elektrolysemodus bzw. einer SOEC und/oder SOFC zur Erzeugung von Dampf und Speicherung des Dampfes aus dem Brennstoffzellenmodus in einem Ruthsspeicher oder Speicherung des Abdampfes aus der Reaktion des Wasserstoffes mit dem Sauerstoff aus dem Brennstoffzellenmodus in einem Dampf-Druckspeicher für den späteren Einsatz im Elektrolysemodus soll der Dampfbedarf im Elektrolysemodus sinken und eine rSOC und/oder eine SOEC unabhängiger von einer externen Dampfversorgung werden.

Die Nutzung der Abwärme einer SOFC zur Dampferzeugung oder die Nutzung des Abdampfes aus der Reaktion des Wasserstoffes mit dem Sauerstoff kann der Versorgung einer externen SOEC und/oder eines externen Verbrauchers mit Dampf dienen. Eine Speicherung ist dann ebenfalls sinnvoll, wenn die Dampfabnahme durch den externen Verbraucher zeitlich schwankt. Weiterhin werden durch diese Maßnahmen bei einer externen Dampfversorgung einer rSOC (bzw. einer SOEC, insbesondere kombiniert mit einer SOFC) zeitliche Differenzen zwischen Dampfbereitstellung und Dampfnutzung ausgeglichen, die auf unterschiedliches Lastverhalten der Dampferzeugung und der Dampfnutzung zurückzuführen sind. Bisher führten solche Abweichungen dazu, dass überschüssiger Dampf nicht genutzt bzw. bei Dampfmangel die Elektrolyse die notwendige Wasserstoffleistung nicht liefern konnte.

Bei gleichzeitiger Speicherung des im SOEC-Modus einer rSOC erzeugten Wasserstoffs in einem Druckspeicher, kann die rSOC (bzw. einer SOEC, insbesondere kombiniert mit einer SOFC) weitestgehend unabhängig von einer externen Wasserdampf- und Wasserstoffversorgung zum Ausgleich von Lastschwankungen im Stromverteilernetz betrieben werden.

Wärmequellen (wobei hier überwiegend externe noch nicht genutzte als auch noch nicht genutzte interne gemeint sind) mit Temperaturen unterhalb von 100°C werden für die interne Wasserdampf-Produktion verwendet, wobei eine Wasserverdampfung bei niedrigen Drücken, insbesondere unterhalb von 1 bar, durchgeführt wird, wobei eine anschließende Druckerhöhung des hergestellten Wasserdampfes auf den Betriebsdruck der Elektrolyse erfolgt oder eine Elektrolyse bei niedrigen Drücken, insbesondere unterhalb von 1 bar, erfolgt, wobei die gebildeten Elektrolyseprodukte, wenigstens Wasserstoff, insbesondere getrennt auf den Abgabedruck verdichtet werden, insbesondere einer Druckerhöhung vor der weiteren Verarbeitung zugeführt werden können.

Weiter können Wärmequellen mit Temperaturen unterhalb von 100°C für die Wasserdampf-Produktion intern verwendet werden, wobei das Temperaturniveau der Wärmequelle mittels eines Wärmepumpenprozesses auf ein für die Dampferzeugung für die Elektrolyse nutzbares Niveau angehoben wird. Zur Wasserdampf-Produktion wird hierzu die Energie der Wärmequellen mit Temperaturen unterhalb von 100 °C erst mithilfe des Wärmepumpenprozesses nutzbar gemacht.

Ferner können Wärmequellen mit Temperaturen unterhalb von 100°C für die Wasserdampf-Produktion intern verwendet werden, wobei eine interne Kreislaufführung der Produkte nach der Zelle, insbesondere des Wasserstoffes, als Schleppgas zur Wasserdampf-Produktion durch Verdunstung beim Temperaturniveau der Wärmequelle verwendet werden und so auch geringe Temperaturen ausreichen, um Wasserdampf intern herzustellen.

Eine geregelte rekuperative Erwärmung von Luft und/oder Wasserstoff kann, insbesondere in einer SOFC und im SOFC-Betrieb einer rSOC mit größer dimensionierten Rekuperatoren erfolgen, wobei ein Bypassstrom der Luft und/oder des Wasserstoffes Temperatur-geregelt um den/die größer dimensionierten Rekuperatoren geführt ist. Durch die Regelung der Vorwärmtemperatur für die Luft und den Wasserstoff werden Thermospannungen im Stack (dem Brennstoffzellenstapel) einer SOFC bzw. einer rSOC im SOFC-Modus vermieden. Daher können schneller größere Lastbereiche durchfahren werden, ohne dass dabei Schäden am Stack erwartet oder Leistungsverluste befürchtet werden müssen.

Erfindungsgemäß ist wenigstens eine Wasserverdampfungsanordnung, ein Dampferzeuger und/oder Wärmetauscher zur Wasserdampferzeugung in wenigstens einer Gasabfuhrleitung angeordnet, um Wasserdampf zu erzeugen.

In einer bevorzugten Ausführungsform sind in beiden Abgasleitungen Wasserverdampfungsanordnungen vorgesehen.

Besonders vorteilhaft ist die Anordnung bzw. das Verfahren zur Verwendung in einer reversiblen solid Oxide Cell [rSOC] oder einer kombinierten SOFC/SOEC-Anordnung anwendbar. Erfindungsgemäß wird die Abgaswärme aus dem SOFC-Betrieb zur Erzeugung von Druckdampf genutzt, der bevorzugt in einem Ruthsspeicher gepuffert werden kann, um den Dampf im anschließenden SOEC-Betrieb als Prozessdampf wieder einzusetzen.

Gleichzeitig wird der für die Dampferzeugung im SOFC-Betrieb installierte Abgaswärmeübertrager auch zur Dampferzeugung im SOEC-Betrieb genutzt, so dass der Dampfbedarf der Elektrolyse insgesamt sinkt.

Die Wasserverdampfungsanordnung, der Dampferzeuger und/oder der Wärmetauscher zur Wasserdampferzeugung ist in wenigstens einer, bevorzugt in beiden Gasabfuhrleitung stromabwärts nach einem rekuperativen Vorwärmer zur Vorwärmung von an die Elektrolyse-/Brennstoffzelle zuzuführendem Gas angeordnet. Insbesondere für eine SOEC bzw. rSOC im SOEC Modus wird so die Restwärme aus dem Luft-O₂-Abgasstrom und Wasserstoff-Wasserdampf-Gasstrom zur Erzeugung von Wasserdampf genutzt, der sofort wieder in der SOEC zur Herstellung von Wasserstoff eingesetzt wird oder auch bei entsprechender Dimensionierung der Wasserverdampfungsanordnung zwischengespeichert werden kann, wodurch insgesamt der externe Dampfbedarf der SOEC sinkt.

Es kann ein Wärmespeicher, ein Ruthsspeicher, ein Gasdruckspeicher mit vorgeschaltetem Verdichter, ein Hochtemperaturspeicher, ein Latentwärmespeicher und/oder ein thermochemischer Wärmespeicher zur Speicherung von erzeugtem Wasserdampf vorgesehen werden, wobei der Speicher insbesondere zum Ausgleich der unterschiedlichen Lastzustände und für die Überbrückung der Zeit zwischen Erzeugung und Nutzung benötigt wird. Auf diese Art ist es möglich, einen von externer Dampfversorgung unabhängigen Betrieb einer SOEC in Kombination mit einer SOFC und/oder rSOC zu betreiben. Ferner ist durch einen Gasdruckspeicher zur Speicherung des Abdampfes aus der Brennstoffzellenreaktion die zeitversetzte Nutzung von Wasserdampf aus dem SOFC-Modus einer rSOC in dem SOEC-Modus möglich. Dabei wird besonders vorteilhaft der Dampf vor der Speicherung verdichtet und/oder die beiden Betriebsmodi werden bei unterschiedlichem Druck betrieben.

Weiter kann hierzu eine Wasserverdampfungsanordnung mit einer Wärmezufuhr mit Niedertemperatur aus der SOEC, SOFC und/oder rSOC oder aus einer externen, bisher für die Wasserdampferzeugung nicht nutzbaren Wärmequelle vorgesehen sein, wobei der Druck bei einer darin stattfindenden Wasserdampferzeugung entsprechend dem Temperaturniveau der Wärmequelle unter 1 bar beträgt, wobei nach der Wasserverdampfungsanordnung ein Verdichter vorgesehen ist, der den Druck des erzeugten Wasserdampfes auf Prozessdruck erhöht oder der Druck in der nachfolgenden Elektrolysezelle [SOEC], in der der hergestellte Wasserdampf verwendet werden soll, unter 1 bar beträgt und das nach der Elektrolysezelle [SOEC] je ein Verdichter vorgesehen ist, der den Druck des und/oder der erhaltenen Elektrolysegase auf Umgebungsdruck erhöht.

Zur Nutzung von Wärmequellen mit einer Temperatur von <100 °C für die Dampfversorgung einer SOEC kann entweder
- die Wasserverdampfung bei niedrigerem Druck (< 1bar) durchgeführt werden, wobei der Dampf anschließend auf den für die SOEC erforderlichen Druck verdichtet wird,
- die Wasserverdampfung und die Elektrolyse bei niedrigerem Druck (< 1 bar) durchgeführt und die Produkte (Sauerstoff, Wasserstoff) nach der Elektrolyse auf Umgebungsdruck verdichtet werden,
- ein Wärmepumpenprozess genutzt werden, um die Niedertemperaturwärme im Temperaturniveau aufzuwerten, so dass eine Dampferzeugung bei Temperaturen >100 °C und damit bei Prozessdruck der SOEC möglich ist,
   oder
- es kann durch eine interne Kreislaufführung von Wasserstoff eine Verdunstung des Wassers beim Temperaturniveau der Wärmequelle durchgeführt werden, um so den Kreislauf-Wasserstoff als Schleppgas für die Wasserdampfproduktion, den Wasserdampf zu nutzen. Der Partialdruck des Wasserdampfes im Schleppgas wird durch das Temperaturniveau der Wärmequelle bestimmt.

Weiter kann auch zusätzlich eine Wärmepumpenanordnung vorgesehen werden, wobei diese die Niedertemperaturwärme mit T<100°C unter Energieeinsatz auf ein höheres Temperaturniveau zur Verwendung als Wärme für eine Wasserverdampfung bei Prozessdruck der SOEC bringt.

Durch die oben beschriebenen technischen Maßnahmen zur Nutzung von Niedertemperaturwärme wird diese für die Dampfversorgung der SOEC bzw. rSOC nutzbar gemacht. Bisher war Niedertemperaturwärme zur Dampferzeugung für eine SOEC oder rSOC nicht nutzbar.

Es ist in einer Ausführungsform ein Wasserstoffspeicher in bevorzugter Form als Gasdruckspeicher zur internen Speicherung von Wasserstoff vorgesehen. Durch die Integration des erfindungsgemäßen Dampfspeichers und die Nutzung des Wasserstoffspeichers (z.B. Gasdruckspeicher) kann die reversible Hochtemperatur-Brennstoffzelle [rSOC] bzw. SOEC/SOFC-Kombination in Abhängigkeit der gewählten Speichergrößen wasserdampf- und wasserstoffautark betrieben werden.

Der eventuell aufgrund eines nicht vollständigen Brennstoffumsatz im Abdampf enthaltene Restwasserstoff aus dem Brennstoffzellenbetrieb kann entweder zusammen mit dem Wasserdampf im Druckspeicher gepuffert oder durch ein geeignetes Gastrennverfahren vor der Pufferung des Dampfes aus dem Dampf-H₂-Gemisch abgetrennt werden.

Für den Betrieb einer Hochtemperatur-Brennstoffzelle [SOFC] bzw. einer rSOC im SOFC-Modus können die benötigte Luft und der benötigte Wasserstoff zur Sicherung der Mindesttemperatur und zur Vermeidung von unzulässigen Thermospannungen im Stack (Brennstoffzellenstapel) mit heißem Abgas rekuperativ vorgewärmt werden. Um Abweichungen von der optimalen Vorwärmtemperatur bei Laständerungen zu vermeiden, können die Rekuperatoren größer dimensioniert werden, um die Regelung der Vorwärmtemperatur für die Luft und den Wasserstoff durch einen Bypassstrom um die jeweiligen Rekuperatoren durchzuführen.

Selbst wenn eine externe Dampf- und/oder Wasserstoffversorgung vorhanden ist, können mit diesen Speichertechnologien Schwankungen in der Wasserdampf- und Wasserstoffversorgung ausgeglichen werden.

Die wesentlichen Vorteile der Erfindung und aufgeführten besonderen Ausgestaltungen lassen sich auch noch weiter ergänzend, wie nachfolgend ausgeführt, darstellen, wobei diese Aufzählung nicht abschließend sein soll:
Besondere Vorteile für die SOEC und rSOC im SOEC-Modus:
   - durch Dampfspeicher, insbesondere einen Ruthsspeicher wird eine SOEC unabhängiger von der Verfügbarkeit und vom Lastverhalten der externen Dampfversorgung,
   - durch die Nutzung der Restwärme aus dem SOEC-Prozess zur Dampferzeugung und Nutzung des erzeugten Dampfes im SOEC-Prozess sinkt der externe Dampfbedarf,
   - durch die vorgeschlagenen technischen Lösungen kann kostengünstigere und mehr verfügbare Niedertemperaturwärme zur Dampferzeugung für eine SOEC eingesetzt werden Besondere Vorteile für die SOFC und rSOC im SOFC-Modus:
   - durch die Regelung der Luft- und Wasserstoff-Vorwärmtemperaturen für die SOFC können größere Lastwechsel ohne die Gefahr der Zerstörung von Zellen des Brennstoffzellen-Stacks durchgeführt werden
Besondere Vorteile für die rSOC:
   - durch Ruthsspeicher wird eine rSOC unabhängiger von der Verfügbarkeit und vom Lastverhalten der externen Dampfversorgung,
   - bisher nicht genutzte Restwärme aus dem SOFC-Modus wird zur Dampfversorgung im SOEC-Modus genutzt,
   - Wasserstofferzeugung im SOEC-Modus wird für die Wasserstoffversorgung im SOFC-Modus genutzt,
   - eine Unabhängigkeit von einer externen Wasserdampf- und Wasserstoffversorgung ist möglich

Insbesondere sei noch darauf hingewiesen, dass ein derartiges Verfahren bzw. eine derartig ausgebildete SOFC, SOEC und/oder rSOC besonders für die Verbindung mit einer Anlage zur Herstellung von synthetischen Kohlenwasserstoffen geeignet ist, wobei hierzu insbesondere eine Fischer-Tropsch- oder Methan-Syntheseanlage, insbesondere betrieben mit elektrischer Energie aus regenerativen Energiequellen, die entsprechend bedingt Schwankungen unterliegen (Solar-, Windenergie) zu nennen sind. Also die Anlage kann Bestandteil einer Kohlenwasserstoffsynthetisierungsanlage, insbesondere im Synthetisierungsvorgang mit regenerativ hergestellter Elektroenergie arbeitend, sein, wobei der externe Wasserdampf überwiegend von der Kohlenwasserstoffsynthetisierungsanlage stammt.

Nachfolgend werden Ausführungsbeispiele der Erfindung anhand der beiliegenden Zeichnungen in der **Figurenbeschreibung** detailliert beschrieben, wobei diese die Erfindung erläutern sollen und nicht beschränkend zu werten sind:
Es zeigen:
- Fig. 1: eine schematische Darstellung eines Ausführungsbeispiels einer SOEC (Hochtemperatur-Wasserdampf-Elektrolyse);
- Fig. 2: eine schematische Darstellung Ausführungsbeispiels einer SOFC (Brennstoffzelle);
- Fig. 3: eine schematische Darstellung eines Ausführungsbeispiels der SOEC mit einem Ruthsspeicher zur Speicherung von externem Dampf und interner Dampferzeugung zur Senkung des externen Dampfbedarfs;
- Fig. 4: eine schematische Darstellung eines ersten Ausführungsbeispiels zur Nutzung von Niedertemperaturwärme zur Dampferzeugung für eine SOEC;
- Fig. 5: eine schematische Darstellung eines zweiten Ausführungsbeispiels zur Nutzung von Niedertemperaturwärme zur Dampferzeugung für eine SOEC;
- Fig. 6: eine schematische Darstellung eines dritten Ausführungsbeispiels zur Nutzung von Niedertemperaturwärme zur Dampferzeugung für eine SOEC;
- Fig. 7: eine schematische Darstellung eines vierten Ausführungsbeispiels zur Nutzung von Niedertemperaturwärme zur Dampferzeugung für eine SOEC;
- Fig. 8: eine schematische Darstellung eines Ausführungsbeispiels zur Regelung der Vorwärmtemperatur für die Luft und den Wasserstoff bei einer SOFC;
- Fig. 9: eine schematische Darstellung eines Ausführungsbeispiels einer rSOC (reversible Hochtemperatur-Brennstoffzelle) mit Eigendampfversorgung und Ruthsspeicher sowie geregelter Luft- und Wasserstoffvorwärmung im SOFC-Modus und
- Fig. 10: eine schematische Darstellung eines Ausführungsbeispiels einer Speicherung des Wasserdampfes bzw. des Wasserdampf-Wasserstoff-Gemisches aus den Brennstoffzellen im SOFC-Modus einer rSOC für den späteren Einsatz im SOEC-Modus.

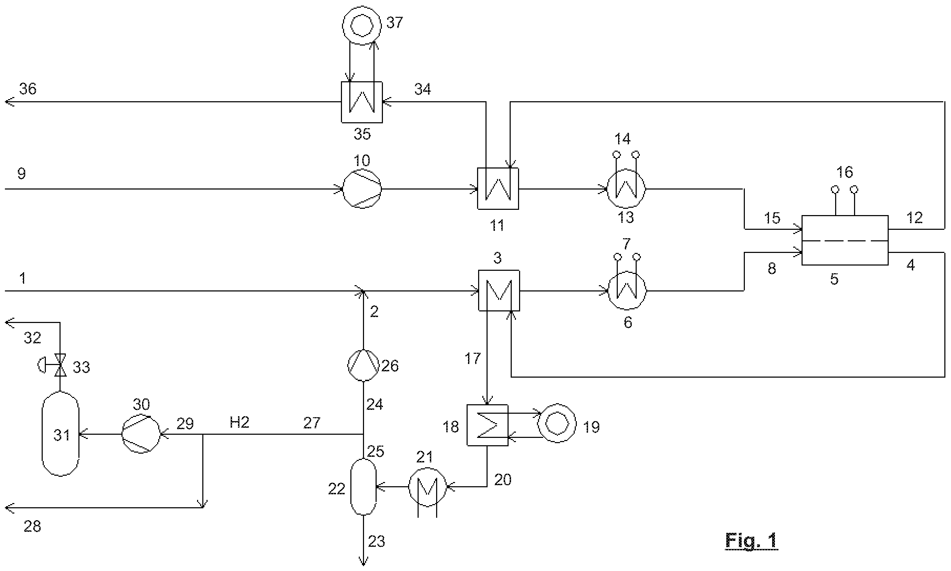

In **Fig. 1** ist eine schematische Darstellung eines im Stand der Technik bekannten Ausführungsbeispiels einer SOEC (Hochtemperatur-Wasserdampf-Elektrolyse) gezeigt.

Wasserdampf 1 wird mit einer geringen Menge rezirkuliertem Wasserstoff 2 vermischt und im rekuperativen Vorwärmer 3 gegen heißes Wasserstoff-Wasserdampf-Gemisch 4 aus den Elektrolysezellen 5 so hoch wie möglich vorgewärmt und anschließend im Heizer 6 mit Elektroenergie 7 auf Elektrolysezellen-Eintrittstemperatur 8 erhitzt.

Spülluft 9 wird mit einem Gebläse 10 im Druck erhöht und im Luftvorwärmer 11 rekuperativ gegen das heiße Luft-O₂-Gemisch 12 aus den Elektrolysezellen 5 so hoch wie möglich vorgewärmt. Im Heizer 13 erfolgt die weitere Aufheizung der Spülluft mit Elektroenergie 14 auf Elektrolysezellen-Eintrittstemperatur 15.

In den Elektrolysezellen 5 wird der heiße Wasserdampf 8 unter Verbrauch von Elektroenergie 16 in Wasserstoff und Sauerstoff zerlegt. Der Sauerstoff verlässt mit der Spülluft als Luft-O2-Gemisch 12 und der Wasserstoff mit dem nicht umgesetzten Restwasserdampf als Wasserstoff-Wasserdampf-Gemisch 4 die Elektrolysezellen 5.

Das im Wärmeüberträger 3 abgekühlte Wasserstoff-Wasserdampf-Gemisch 17 wird optional in einem Wärmeüberträger 18 weiter gekühlt. Die abgeführte Wärme kann einer externen Wärmenutzung 19 zugeführt werden.

Im Kühler 21 wird das Gasgemisch 20 aus dem Wärmeüberträger 18 soweit abgekühlt, dass ein Großteil des im Gasgemisch 20 enthaltenen Wasserdampfes kondensiert und im anschließenden Phasentrenner 22 als Kondensat 23 abgeschieden wird.

Ein Teilstrom 24 des den Phasentrenner 22 verlassenden Wasserstoffes 25 wird mit dem Gebläse 26 im Druck erhöht und als Strom 2 dem Wasserdampf 1 zugemischt.

Alternativ kann das Gebläse 26, wenn es für höhere Temperaturen geeignet ist, anstatt den Strom 24 ein Teilstrom Wasserstoff-Wasserdampf-Gemisch nach dem Wärmeüberträger 3 oder 18 rezirkulieren. Damit wird auch ein erhöhter Anteil nicht umgesetzter Wasserdampf rezirkuliert, was den externen Wasserdampfbedarf 1 reduziert.

Die Hauptmenge Wasserstoff 27 wird entweder direkt als Wasserstoffstrom 28 an einen Verbraucher abgegeben oder die gesamte Menge oder Teilmenge 29 wird in einem Verdichter 30 komprimiert und im Druckspeicher 31 gepuffert, aus dem der Wasserstoff zeitverschoben als Strom 32 über das Druckregelventil 33 entnommen und an einen Verbraucher abgegeben werden kann.

Das im Wärmeüberträger 11 abgekühlte Luft-O₂-Gemisch 34 wird im optionalen Wärmeüberträger 35 weiter abgekühlt und als Abgas 36 an die Umgebung abgegeben. Die Wärme aus dem Wärmeüberträger 35 kann einer externen Wärmenutzung 37 zugeführt werden.

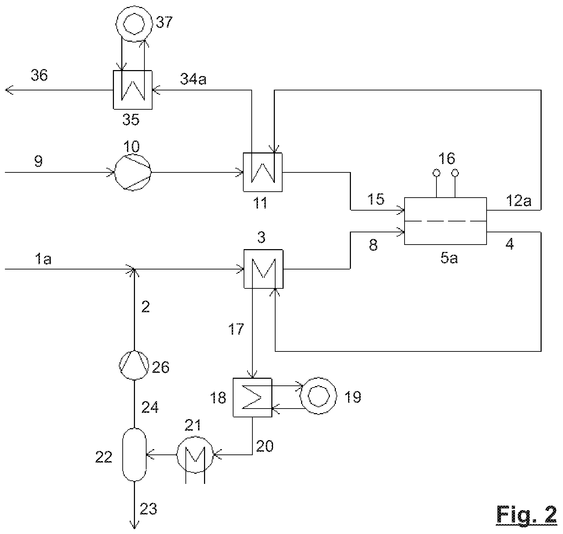

In **Fig. 2** ist eine schematische Darstellung eines im Stand der Technik bekannten Ausführungsbeispiels einer SOFC (Brennstoffzelle) dargestellt.

Wasserstoff 1a wird mit nicht umgesetztem und rezirkuliertem Wasserstoff 2 vermischt und im rekuperativen Vorwärmer 3 gegen heißes Wasserdampf-Wasserstoff-Gemisch 4 aus den Brennstoffzellen 5a auf Brennstoffzellen-Eintrittstemperatur 8 vorgewärmt.

Luft 9 wird mit einem Gebläse 10 im Druck erhöht und im Luftvorwärmer 11 rekuperativ gegen das heiße Luft-Stickstoff-Gemisch 12a aus den Brennstoffzellen 5a auf Brennstoffzellen-Eintrittstemperatur 15 vorgewärmt.

In den Brennstoffzellen 5a reagiert der heiße Wasserstoff 8 mit einem Teil des Luftsauerstoffs 15 zu Wasserdampf. Dabei entsteht Elektroenergie 16, die an das Stromnetz oder an Verbraucher abgegeben wird.

Im die Brennstoffzellen 5a verlassenden heißen Strom 4 sind der gebildete Wasserdampf und der nicht umgesetzte Wasserstoff enthalten.

Das im Wärmeüberträger 3 abgekühlte Wasserdampf-Wasserstoff-Gemisch 17 wird optional in einem Wärmeüberträger 18 weiter gekühlt. Die abgeführte Wärme kann einer externen Wärmenutzung 19 zugeführt werden.

Im Kühler 21 wird das Gasgemisch 20 aus dem Wärmeüberträger 18 soweit abgekühlt, dass ein Großteil des im Gasgemisch 20 enthaltenen Wasserdampfes kondensiert und im anschließenden Phasentrenner 22 als Kondensat 23 abgeschieden wird.

Der verbleibende Wasserstoff 24 aus dem Phasentrenner 22 wird mit dem Gebläse 26 im Druck erhöht und als Strom 2 zur Erhöhung der Brennstoffausnutzung dem Wasserstoff 1a zugemischt.

Der die Brennstoffzellen 5a verlassende heiße Gasstrom 12a enthält die restliche Luft mit einem höheren Stickstoffgehalt, da ein Teil des Luftsauerstoffes sich mit dem Wasserstoff verbunden hat.

Nach Abkühlung dieses Gasstromes 12a im Wärmeüberträger 11 wird er als Strom 34a zur weiteren Abkühlung dem optionalen Wärmeüberträger 35 zugeführt und verlässt anschließend als Abgasstrom 36 den Prozess.

Die Wärme aus dem Wärmeüberträger 35 kann einer externen Wärmenutzung 37 zugeführt werden.

Stand der Technik zur reversible Hochtemperatur-Brennstoffzelle (**rSOC**) entsprechend den Figuren 1 und 2:
Die reversible Hochtemperatur-Brennstoffzelle (rSOC) entspricht der Schaltung in Fig. 1, wobei der SOEC-Modus der Beschreibung zu Fig. 1 entspricht. Die Beschreibung zum SOFC-Modus entspricht im Wesentlichen der Beschreibung zu Fig. 2, wobei die elektrischen Heizer 6 und 13 nicht in Betrieb sind und im SOFC-Modus nur durchströmt werden.

Die Wasserstoffabgabe 27 und 28 sowie die Wasserstoffverdichtung 30 sind im SOFC-Modus ebenfalls nicht in Betrieb.

Als Grundlage für die nachfolgenden Figuren wird auf die Figurenbeschreibungen 1 (SOEC) und 2 (SOFC) verwiesen, aus denen die grundlegenden Funktionen und Begrifflichkeiten ersichtlich sind.

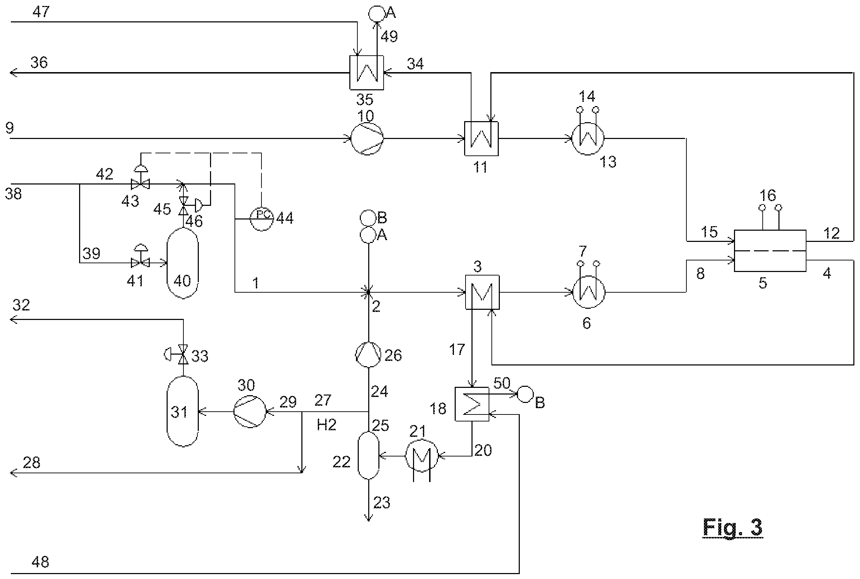

**Fig. 3** zeigt eine schematische Darstellung eines Ausführungsbeispiels einer SOEC gemäß Fig. 1 mit einem Ruthsspeicher zur Speicherung von externem Dampf und interner Dampferzeugung zur Senkung des externen Dampfbedarfs.

Der aus einer externen Dampferzeugung bereitgestellte Druckdampf 38 soll als Dampf 1 für eine SOEC eingesetzt werden. Das Lastverhalten der externen Dampferzeugung weicht vom Lastverhalten der SOEC ab, so dass in Bezug auf den Dampfbedarf der SOEC einmal mehr und ein anderes Mal weniger Dampf aus der externen Dampferzeugung zur Verfügung steht.

Zur Angleichung an den Dampfbedarf für die SOEC soll deshalb der aus der externen Dampferzeugung gelieferte Überschuss-Druckdampf 39 in einem Wärmespeicher 40 zwischengepuffert werden.

Der Wärmespeicher 40 ist z.B. ein mit Siedewasser und Sattdampf gefüllter Gleitdruckspeicher (Ruthsspeicher). Andere geeignete Wärmespeicher sind z.B. Schichtenspeicher, Flüssigsalzspeicher und thermochemische Speicher.

Beim Ladevorgang wird der Überschussdruckdampf 39 über die Armatur 41 in den Speicher 40 gegeben. Der restliche Dampf 42 wird über das Drosselventil 43 auf den Druck 44 reduziert und als Dampf 1 für die SOEC eingesetzt.

Zu Beginn des Ladevorganges befinden sich im Speicher 40 Siedewasser und Sattdampf bei Dampfabgabedruck 44. Durch die Zuführung von Druckdampf 39 wird das Siedewasser im Behälter 40 aufgeheizt und der Druck im Behälter steigt an. Der maximal mögliche Druck entspricht dem Druck des zugeführten Druckdampfes 39. Durch den Druckanstieg vermindert sich der Dampfanteil und erhöht sich der Wasseranteil im Behälter. Die zugeführte Wärme ist in Form von Siedewasser gespeichert (Prinzip eines Ruthsspeichers).

Besteht in der SOEC Dampfmangel, weil die externe Dampferzeugung direkt zu wenig Dampf liefert, wird das Drosselventil 45 am Speicher 40 geöffnet und die gewünschte Differenzdampfmenge 46 aus dem Wärmespeicher 40 entnommen.

Durch die Dampfentnahme reduziert sich der Druck im Behälter 40, und es wird Siedewasser im Behälter verdampft. Eine Dampfentnahme ist bis auf den Druck 44 möglich.

Nach der Dampfentnahme kann der Wärmespeicher 40 wieder aufgeladen werden.

Zur Senkung des externen Dampfbedarfs 1 können die Wärmeüberträger 18 und 35 anstatt Wärme für externe Verbraucher zur Verfügung zu stellen, zur Erzeugung von Dampf genutzt werden. Dazu wird Speisewasser 47 und 48 zu den jeweiligen Wärmeüberträgern 35 und 18 gegeben. Der erzeugte Dampf 49 und 50 wird in den Dampfstrom 1 über A bzw. B zum Wärmeüberträger 3 eingemischt und führt zu einer Reduzierung der notwendigen Dampfmenge 1.

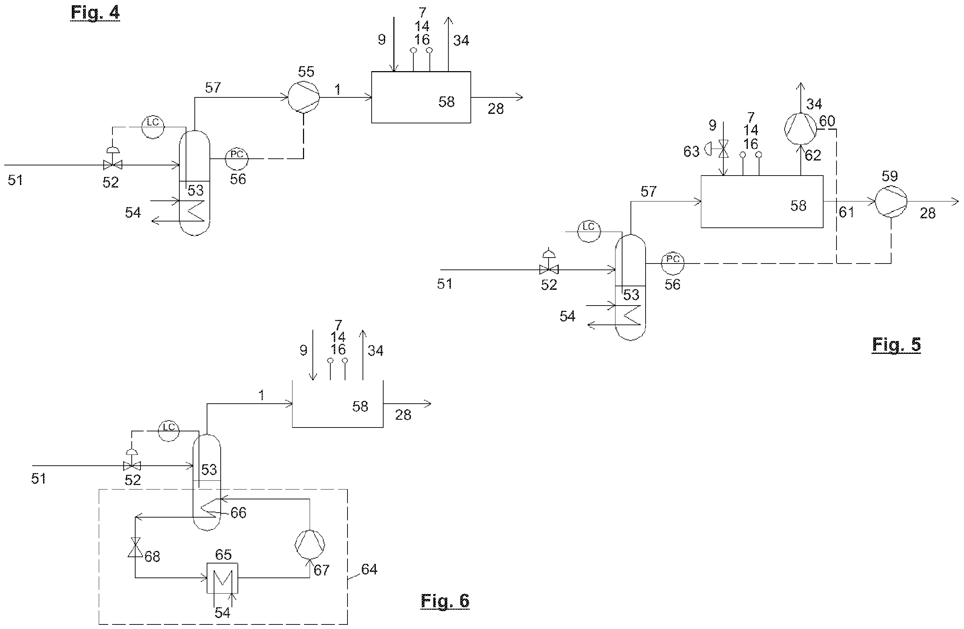

Um Niedertemperaturwärme zur Verdampfung von Wasser und Versorgung der SOEC mit Dampf einzusetzen, wird in den nachfolgenden 4 Ausführungsbeispielen gemäß Fig. 4 bis Fig. 7 ausgeführt, wobei es sich bei den aufgeführten Verdampfern um eine mögliche Ausführungsform handelt und andere geeignete Verdampfer auch eingesetzt werden können.

**Fig. 4** zeigt eine schematische Darstellung eines ersten Ausführungsbeispiels zur Nutzung von Niedertemperaturwärme zur Dampferzeugung für eine SOEC gemäß Fig. 1.

Speisewasser 51 wird über ein Drosselventil 52 Füllstand geregelt in einen Verdampfer 53 gegeben, der mit Niedertemperatur-Wärme 54 beheizt wird. Mit einem Sauggebläse 55 wird im Verdampfer 53 ein Unterdruck 56 eingestellt, der so hoch ist, dass das mit der Niedertemperatur-Wärme 54 aufgeheizte Speisewasser 51 verdampft. Der entstandene Niederdruckdampf 57 wird mit dem Gebläse 55 abgesaugt, verdichtet und als Prozessdampf 1 mit dem erforderlichen Überdruck der SOEC 58 zugeführt, wo er mit Elektroenergie 7, 14 und 16 in Wasserstoff 28 und Sauerstoff zerlegt wird, der über Spülluft 9 als Luft-Sauerstoff-Gemisch 34 aus der SOEC ausgebracht wird.

In **Fig. 5** ist eine schematische Darstellung eines zweiten Ausführungsbeispiels zur Nutzung von Niedertemperaturwärme zur Dampferzeugung für eine SOEC gemäß Fig. 1 dargestellt.

Speisewasser 51 wird über ein Drosselventil 52 Füllstand geregelt in einen Verdampfer 53 gegeben, der mit Niedertemperatur-Wärme 54 beheizt wird. Mit den beiden Sauggebläsen 59 und 60 wird im Verdampfer 53 ein Unterdruck 56 eingestellt, der so hoch ist, dass das mit der Niedertemperatur-Wärme 54 aufgeheizte Speisewasser 51 verdampft. Der entstandene Niederdruckdampf 57 wird mit den Gebläsen 59 und 60 abgesaugt und mit dem niedrigen Druck der SOEC 58 zugeführt, die bei Unterdruck betrieben wird.

In der SOEC 58 wird der Wasserdampf 57 mit Elektroenergie 7, 14 und 16 in Wasserstoff 61 und Sauerstoff 62 zerlegt. Zur Spülung der SOEC wird Spülluft 9 eingesetzt, die über das Drosselventil 63 auf den Betriebsdruck der SOEC 58 entspannt wird. Das Gebläse 59 verdichtet den Wasserstoff 61 auf den Abgabezustand 28 und das Gebläse 60 den Sauerstoff 62 und die Spülluft auf den Abgabezustand 34.

In **Fig. 6** ist eine schematische Darstellung eines dritten Ausführungsbeispiels zur Nutzung von Niedertemperaturwärme zur Dampferzeugung für eine SOEC gemäß Fig. 1 gezeigt.

Um die Niedertemperatur-Wärme 54 im Temperaturniveau so aufzuwerten, dass eine Verdampfung des Speisewassers 51 bei Temperaturen >100 °C möglich ist, kann auch eine Wärmepumpe 64 eingesetzt werden. Wärmepumpen sind als kompakte Einheiten bestehend aus Verdampfer 65, Kondensator 66, Verdichter 67 und Drosselventil 68 verfügbar und lassen sich den jeweiligen Erfordernissen anpassen.

Der im Verdampfer 53 erzeugte Dampf 1 wird mit den für die SOEC 58 erforderlichen Parametern erzeugt und kann in dieser direkt eingesetzt werden.

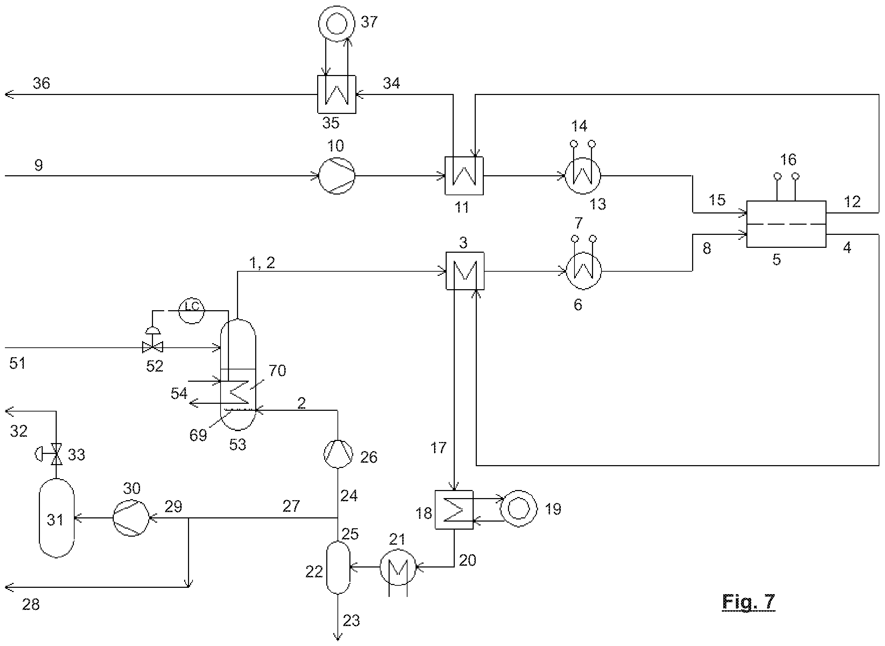

**Fig. 7** zeigt eine schematische Darstellung eines vierten Ausführungsbeispiels zur Nutzung von Niedertemperaturwärme zur Dampferzeugung für eine SOEC gemäß Fig. 1.

Speisewasser 51 wird über das Regelventil 52 Füllstand-geregelt dem Dampferzeuger 53 zugeführt, der mit Niedertemperatur-Wärme 54 beheizt wird.

Die rezirkulierte Wasserstoffmenge 2 wird über Verteilerelemente 69, die im Wasserbad 70 des Dampferzeugers 53 untergebracht sind, im mit Niedertemperatur-Wärme 54 aufgeheizten Wasserbad 70 fein verteilt. Der Wasserstoff 2 durchströmt das Wasserbad 70 und nimmt dabei Wasserdampf 1 bis zum Sättigungsdruck der jeweiligen Wasserbadtemperatur auf. Das Wasserstoff-Wasserdampf-Gemisch 1+2 wird den folgenden Prozessstufen der SOEC zugeführt.

Um die erforderliche Wasserdampfmenge dem Prozess zuzuführen, muss die rezirkulierte Wasserstoffmenge 2 in Abhängigkeit des Temperaturniveaus der Niedertemperatur-Wärme 54 erhöht und angepasst werden.

Alternativ kann das Gebläse 26, wenn es für höhere Temperaturen geeignet ist, anstatt den Strom 24 ein Teilstrom Wasserstoff-Wasserdampf-Gemisch nach dem Wärmeüberträger 3 oder 18 rezirkulieren. Damit wird auch ein erhöhter Anteil nicht umgesetzter Wasserdampf wieder genutzt, was den Wärmebedarf 54 für die Wasserverdampfung reduziert.

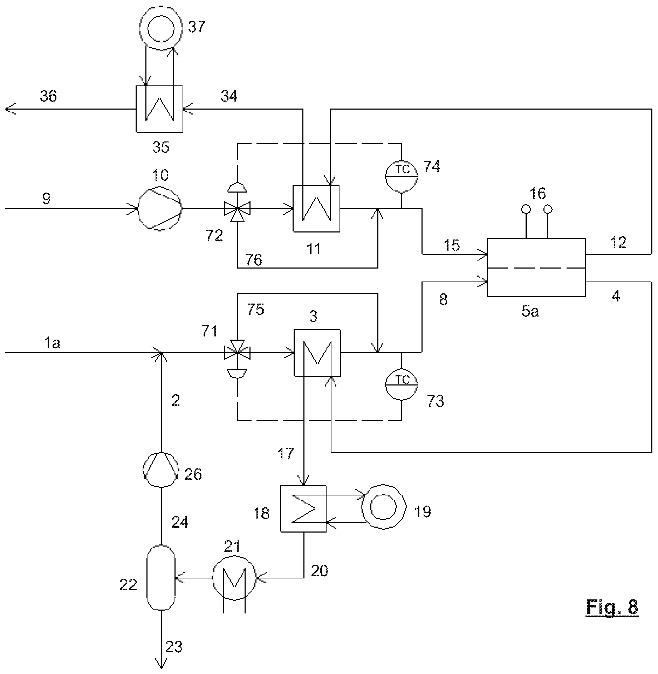

**Fig. 8** zeigt eine schematische Darstellung eines Ausführungsbeispiels zur Regelung der Vorwärmetemperatur für die Luft und den Wasserstoff bei einer SOFC gemäß Fig. 2.

Damit im SOFC-Betrieb bei Abweichungen vom Auslegungspunkt der Wärmeüberträger 3 und 11 die Luft 15 und der Wasserstoff 8 nicht zu heiß oder zu kalt in die Brennstoffzellen 5a gelangen und dort aufgrund von Thermospannungen zu Zerstörung der Zellen führen, sind die Wärmeüberträger 3 und 11 derart dimensioniert, dass sie bei maximaler Last (Gasmenge 8 bzw. 15) mindestens die gewünschte Vorwärmtemperatur für die Ströme 8 und 15 bringen. Bei der Auslegung für Teillast muss beachtet werden, dass der Wärmedurchgang nicht schneller abnimmt als die notwendige Wärmeüberträgerfläche, so dass die gewünschte Vorwärmtemperatur der Ströme 8 und 15 mindestens erbracht, möglichst aber überschritten wird.

Um in allen Lastzuständen die gewünschte Vorwärmtemperatur einzustellen, werden vor den Wärmeüberträgern 3 bzw. 11 die Regelarmaturen 71 und 72 in die den jeweiligen Wärmeüberträgern zugeführten Gasströme installiert, die in Abhängigkeit der gewünschten Solltemperaturen 73 bzw. 74 einen kalten Teilstrom Wasserstoff 75 bzw. Luft 76 um den jeweiligen Wärmeüberträger herumführen und nach diesem in das heiße Gas einmischen, so dass die sich jeweils ergebende Mischtemperatur der vorgegebenen Solltemperatur entspricht.

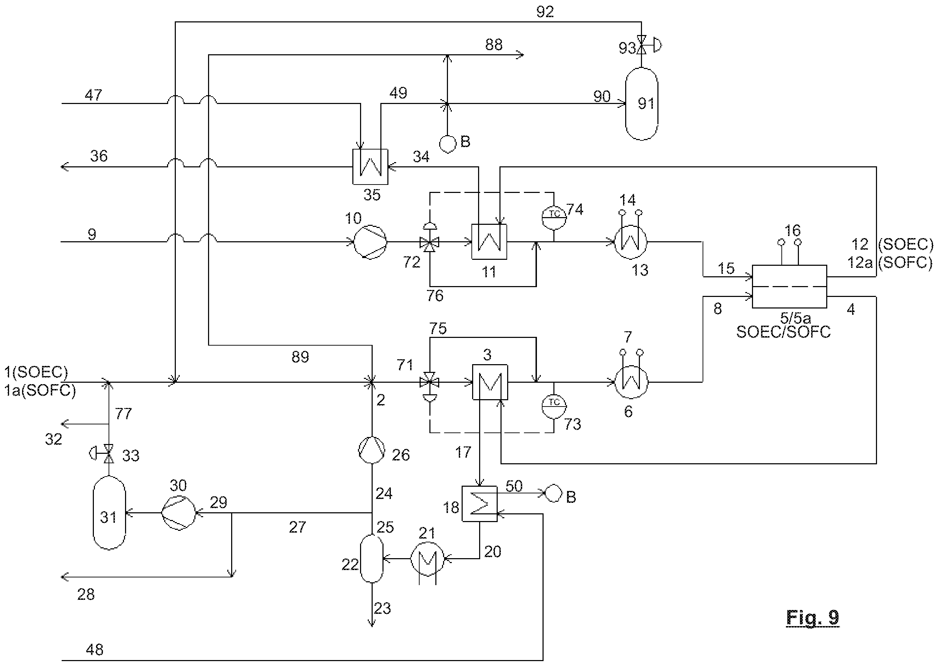

In **Fig. 9** ist eine schematische Darstellung eines Ausführungsbeispiels einer rSOC (reversible Hochtemperatur-Brennstoffzelle) mit Eigendampfversorgung und Ruthsspeicher sowie geregelter Luft- und Wasserstoffvorwärmung im SOFC-Modus dargestellt.

### Elektrolyse-Modus (SOEC-Modus):

Wasserdampf 1 wird mit einer geringen Menge rezirkuliertem Wasserstoff 2 vermischt und im rekuperativen Vorwärmer 3 gegen heißes Wasserstoff-Wasserdampf-Gemisch 4 aus der Elektrolysezelle 5 vorgewärmt und anschließend im Heizer 6 mit Elektroenergie 7 auf Elektrolysezellen-Eintrittstemperatur 8 vorgewärmt.

Die Regelung der Vorwärmtemperatur 73 ist im SOEC-Modus nicht in Betrieb, da eine maximale Vorwärmung im Wärmeüberträger 3 zur Reduzierung des Strombedarfs 7 für den Heizer 6 angestrebt wird. D.h. es wird kein Wasserstoff im Bypass 75 um den Wärmeüberträger 3 geführt.

Spülluft 9 wird mit einem Gebläse 10 im Druck erhöht und im Luftvorwärmer 11 rekuperativ gegen das heiße Luft-O₂-Gemisch 12 aus der Elektrolysezelle 5 vorgewärmt. Im Heizer 13 erfolgt die weitere Aufheizung des Gasgemisches mit Elektroenergie 14 auf Elektrolysezellen-Eintrittstemperatur 15.

Die Regelung der Vorwärmtemperatur 74 ist im SOEC-Modus ebenfalls nicht in Betrieb, da eine maximale Vorwärmung im Wärmeüberträger 11 zur Reduzierung des Strombedarfs 14 für den Heizer 13 angestrebt wird. D.h. es wird keine Spülluft im Bypass 76 um den Wärmeüberträger 11 geführt.

In der Elektrolysezelle 5 wird der vorgeheizte Wasserdampf 8 unter Verbrauch von Elektroenergie 16 in Wasserstoff und Sauerstoff zerlegt. Der Sauerstoff verlässt mit der Spülluft als Luft-O₂-Gemisch 12 und der Wasserstoff mit dem Restwasserdampf als Wasserstoff-Wasserdampf-Gemisch 4 die Elektrolysezellen 5.

Das im Wärmeüberträger 3 abgekühlte Wasserstoff-Wasserdampf-Gemisch 17 wird in einem Wärmeüberträger 18 weiter abgekühlt. Zur Wärmeabführung wird Speisewasser 48 erwärmt und anschließend in Dampf 50 umgewandelt.

Im Kühler 21 wird das Gasgemisch 20 aus dem Wärmeüberträger 18 soweit abgekühlt, dass ein Großteil des im Gasgemisch 20 enthaltenen Wasserdampfes kondensiert und im anschließenden Phasentrenner 22 als Kondensat 23 abgeschieden wird.

Ein Teilstrom 24 des den Phasentrenner 22 verlassenden Wasserstoffes 25 wird mit dem Gebläse 26 im Druck erhöht und als Strom 2 dem Wasserdampf 1 zugemischt.

Alternativ kann das Gebläse 26, wenn es für höhere Temperaturen geeignet ist, anstatt den Strom 24 ein Teilstrom Wasserstoff-Wasserdampf-Gemisch nach dem Wärmeüberträger 3 oder 18 rezirkulieren. Damit wird auch ein erhöhter Anteil nicht umgesetzter Wasserdampf wieder genutzt, was den externen Wasserdampfbedarf 1 reduziert.

Die Hauptmenge Wasserstoff 27 aus dem Phasentrenner 22 wird entweder direkt als Wasserstoffstrom 28 an einen Verbraucher abgegeben oder die gesamte Menge oder Teilmenge 29 wird in einem Verdichter 30 komprimiert und im Druckspeicher 31 gepuffert, aus dem der Wasserstoff zeitverschoben über das Druckregelventil 33 entnommen und entweder als Strom 32 an einen externen Verbraucher abgegeben oder als Strom 77 dem Prozess als Wasserstoff für den zeitversetzten SOFC-Betrieb wieder zugeführt werden kann.

Das im Wärmeüberträger 11 abgekühlte Luft-O₂-Gemisch 34 wird im Wärmeüberträger 35 weiter abgekühlt und als Abgas 36 an die Umgebung abgegeben.

Die Wärme aus dem Wärmeüberträger 35 wird zur Erwärmung und Verdampfung von Speisewasser 47 genutzt. Der erzeugte Dampf 49 wird zusammen mit dem Dampf 50 (über B) entweder an einen externen Verbraucher 88 oder als Teil- oder Gesamtmenge 89 mit dem Wasserdampf 1 vermischt und dem Wärmeüberträger 3 zugeführt. Damit reduziert sich der Dampfbedarf 1 für die Elektrolysezellen 5. Eine Speicherung als Druckdampf 90 im Ruthsspeicher 91 ist prinzipiell möglich, aber im Elektrolysebetriebsfall nicht sinnvoll.

Aus dem Ruthsspeicher 91 kann Dampf 92 über das Drosselventil 93 entnommen werden, der vorher im Betriebsmodus Brennstoffzellen-Betrieb (SOFC-Modus) gespeichert worden ist. Diese Dampfmenge 92 wird mit dem Wasserdampf 1 vermischt und dem Wärmeüberträger 3 zugeführt und reduziert den Dampfbedarf 1 für die Elektrolysezellen 5.

### Brennstoffzellen-Modus (SOFC-Modus):

Wasserstoff 1a wird mit nicht umgesetztem und rezirkuliertem Wasserstoff 2 vermischt und im Wärmeüberträger 3 gegen heißes Wasserdampf-Wasserstoff-Gemisch 4 aus den Brennstoffzellen 5a rekuperativ aufgewärmt. Zur Einhaltung einer vorgegebenen Vorwärmtemperatur 73 bei allen Lastzuständen wird durch die Regelarmatur 71 ein Bypassstrom um den Wärmeüberträger 3 geführt und mit dem heißen Strom nach dem Wärmeüberträger 3 vermischt.

Der anschließende Heizer 6 ist nicht in Betrieb und wird deshalb nur durchströmt. Der vorgewärmte Wasserstoff 8 gelangt zur Brennstoffzelle 5a.

Luft 9 wird mit einem Gebläse 10 im Druck erhöht und im Luftvorwärmer 11 rekuperativ gegen das heiße Luft-N₂-Gemisch 12a aus der Brennstoffzelle 5a vorgewärmt. Zur Einhaltung einer vorgegebenen Vorwärmtemperatur 74 bei allen Lastzuständen wird durch die Regelarmatur 72 ein Bypassstrom um den Wärmeüberträger 11 geführt und mit dem heißen Strom nach dem Wärmeüberträger 11 vermischt.

Der Heizer 13 ist ebenfalls nicht in Betrieb und wird nur durchströmt. Die vorgewärmte Luft 15 gelangt ebenfalls zur Brennstoffzelle 5a.

In der Brennstoffzelle 5a reagiert der Wasserstoff 8 mit einem Teil des Sauerstoffs der Luft 15 zu Wasserdampf. Dabei entsteht Elektroenergie 16, die ans Stromnetz oder an Verbraucher abgegeben wird.

Im heißen Strom 4 nach der Brennstoffzelle sind der gebildete Wasserdampf und der nicht umgesetzte Wasserstoff enthalten.

Das im Wärmeüberträger 3 abgekühlte Wasserdampf-Wasserstoff-Gemisch 17 wird im Wärmeüberträger 18 weiter gekühlt. Zur Wärmeabführung wird Speisewasser 48 erwärmt und anschließend in Dampf 50 umgewandelt.

Im Kühler 21 wird das Gasgemisch 20 aus dem Wärmeüberträger 18 soweit abgekühlt, dass ein Großteil des im Gasgemisch 20 enthaltenen Wasserdampfes kondensiert und im anschließenden Phasentrenner 22 als Kondensat 23 abgeschieden wird.

Der verbleibende Wasserstoff 24 aus dem Phasentrenner 22 wird vollständig mit dem Gebläse 26 im Druck erhöht und als Strom 2 zur Erhöhung der Brennstoffausnutzung dem Wasserstoff 1a zugemischt.

Der die Brennstoffzelle 5a verlassende heiße Gasstrom 12a enthält die restliche Luft mit einem höheren Stickstoffgehalt, da ein Teil des Luftsauerstoffes sich mit dem Wasserstoff verbunden hat. Nach Abkühlung dieses Gasstromes 12a im Wärmeüberträger 11 wird er als Strom 34 zur weiteren Abkühlung dem Wärmeüberträger 35 zugeführt und verlässt anschließend als Abgasstrom 36 den Prozess.

Die Wärme aus der Gasabkühlung im Wärmeüberträger 35 wird zur Erwärmung und Verdampfung des Speisewasserstromes 47 genutzt. Der erzeugte Dampf 49 wird zusammen mit dem Dampf 50 entweder an externe Verbraucher 88 abgegeben oder zur späteren Nutzung im Elektrolysemodus als Strom 90 im Ruthsspeicher 91 zwischengepuffert.

Der im Elektrolysemodus (SOEC) im Druckspeicher 31 gespeicherte Wasserstoff, kann im Brennstoffzellenmodus dem Speicher entnommen werden und als Strom 77 dem Wasserstoffstrom 1a zugemischt werden. Damit wird die erforderliche externe Wasserstoffmenge 1a entsprechend reduziert.

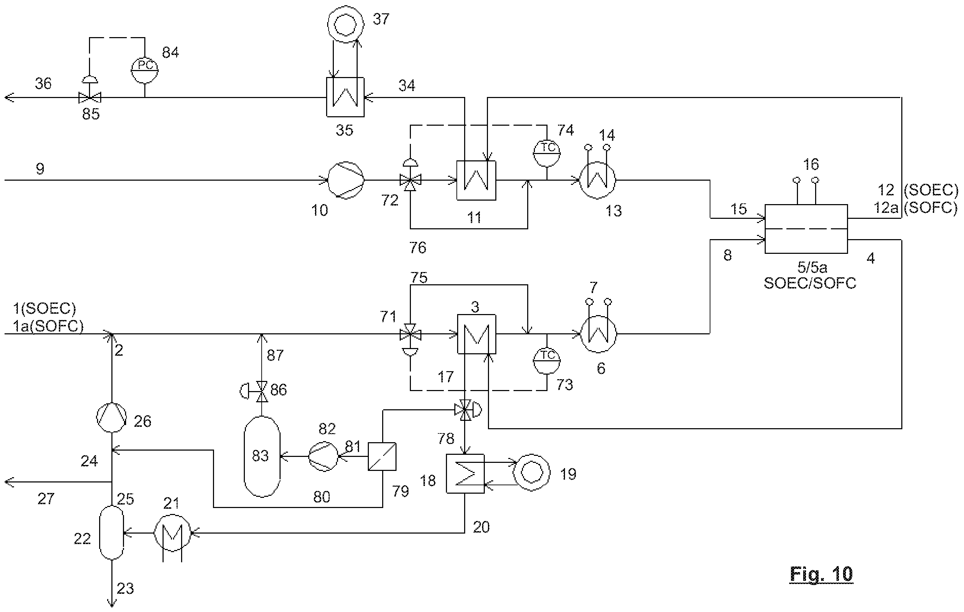

**Fig. 10** zeigt eine schematische Darstellung eines Ausführungsbeispiels einer Speicherung des Wasserdampfes bzw. des Wasserdampf-Wasserstoff-Gemisches aus den Brennstoffzellen im SOFC-Modus einer rSOC für den späteren Einsatz im SOEC-Modus.

Eine andere Möglichkeit Wärme (Wasserdampf) aus dem Brennstoffzellen-Betrieb (SOFC) für den Elektrolyse-Betrieb (SOEC) einer rSOC zu speichern, ist die Anwendung eines Gasdruckspeichers zur Speicherung des Wasserdampfes bzw. Wasserdampf-Wasserstoff-Gemisches aus dem SOFC-Betrieb. Dabei sind zwei Fälle denkbar:
a) Verdichtung des Wasserdampfes vor der Speicherung und
b) SOFC-Betrieb bei höherem Druck als der SOEC-Betrieb.

Eine Kombination aus Fall a) und b) ist ebenfalls möglich.

### Brennstoffzellen-Modus (SOEC):

Soll der Brennstoffzellen-Modus (SOEC) der rSOC bei erhöhtem Druck betrieben werden, wird der Wasserstoff 1 als Druckwasserstoff der rSOC zugeführt und das Gebläse 10 zur Druckerhöhung der Luft 9 ist für eine größere Druckerhöhung ausgelegt.

Das im Wärmeüberträger 3 abgekühlte Wasserdampf-Wasserstoff-Gemisch 17 kann entweder den klassischen Weg über die Wärmenutzung 18, die Kühlung 21 und die Rezirkulation 26 des Rest-Wasserstoffes gehen, oder über die Armatur 78 zu einer optionalen Gastrennung 79 geführt werden.

In der optionalen Gastrennung 79 wird der im Gasstrom 17 enthaltende Rest-Wasserstoff 80 aus dem Wasserdampf-Wasserstoff-Gemisch abgetrennt und dem Gebläse 26 zur Rezirkulation und damit besseren Wasserstoffausnutzung des SOFC-Prozesses zugeführt. Nach der Druckerhöhung wird der Wasserstoff als Strom 2 dem Wasserstoffstrom 1 zugemischt.

Der verbleibende Wasserdampf 81 oder bei Wegfall der Gastrennung 79 das Wasserdampf-Wasserstoff-Gemisch 17 werden mittels Verdichter 82 im Druck erhöht und gelangen in einen Gasdruckspeicher 83, wo das Gas bzw. das Gasgemisch für den SOEC-Modus zwischengepuffert wird. Der Gasverdichter 82 kann entfallen, wenn der SOFC-Betrieb der rSOC bei einem höheren Druck als der SOEC-Betrieb durchgeführt wird.

An dieser Stelle sei noch auf eine weitere mögliche Ausgestaltung hingewiesen, nämlich dass der Verdichter 82 auch entfallen kann, wenn der SOEC-Betrieb bei einem niedrigeren Druck stattfindet als der SOFC-Betrieb.

Der Druckgasspeicher ist gefüllt, wenn der SOFC-Betriebsdruck bzw. der maximale Verdichterenddruck des Verdichters 82 erreicht ist.

Bei Betrieb des SOFC-Modus unter erhöhtem Druck, befindet sich auf der Abgasseite des SOFC-Prozesses im Strom 36 ein Druckregelventil 85 zur Aufrechterhaltung des Systemdruckes 84.

### Elektrolyse-Modus (SOEC):

Der Elektrolyse-Modus (SOEC) wird bei geringerem Druck als der Druck im Druckgasspeicher 83 durchgeführt.

Durch Öffnen der Drosselarmatur 86 am Druckgasspeicher 83 wird der zuvor im SOFC-Modus gespeicherte Wasserdampf/ Wasserdampf-Wasserstoff-Gemisch 87 dem SOEC-Prozess zugeführt und kann ganz oder teilweise den Wasserdampfstrom 1 ersetzen.

Der Gasdruckspeicher 83 ist entladen, wenn der Druck im Speicher gleich dem Druck der rSOC im SOEC-Modus ist.

### Weiteres Ausführunasbeispiel:

Nachfolgend erfolgt die Beschreibung der Erfindung anhand eines konkreten Ausführungsbeispiels unter Hinzunahme der zuvor erläuterten Figuren sowie der nachfolgenden Diagramme:

### Zahlenbeispiel für eine erfindungsgemäße rSOC:

### SOFC-Modus

| | | |
|---|---|---|
| Wasserstoff (1a): | Massenstrom: | 3,19 kg/h |
| | Leistung (Hu): | 105,8 kW |
| Luft (9): | Massenstrom: | 611,4 kg/h |
| Wärmeüberträger (3): | Leistung: | 11,8 kWₜₕ |
| Wärmeüberträger (11): | Leistung: | 105,1 kWₜₕ |
| Wärmeüberträger (35): | Leistung: | 13,2 kWₜₕ |
| Wärmeüberträger (18): | nicht berücksichtigt | |
| Heizer (6): | Leistung: | 0 kWₑₗ |
| Heizer (13): | Leistung: | 0 kWₑₗ |
| Brennstoffzelle (16): | Leistung: | 72,6 kWₑₗ |
| Speisewasser (47): | Massenstrom: | 20,2 kg/h |
| | Druck: | 10 bar(a) |
| | Temperatur: | 100 °C |
| Dampf (90): | Massenstrom: | 20,2 kg/h |
| | Druck: | 10 bar(a) |
| | Sattdampf | |

### SOEC-Modus

Eine Brennstoffzelle mit oben angegebenen Leistungsparametern hat erfahrungsgemäß im Elektrolysemodus folgende Parameter:

| | | |
|---|---|---|
| Wasserdampf (1): | Massenstrom: | 33,4 kg/h/h |
| | Druck: | 2 bar(a) |
| | Sattdampf | |
| Spülluft (9): | Massenstrom: | 62 kg/h |
| Wärmeüberträger (3): | Leistung: | 15,1 kWₜₕ |
| Wärmeüberträger (11): | Leistung: | 13,3 kWₜₕ |
| Wärmeüberträger (35): | Leistung: | 6,0 kWₜₕ |
| Wärmeüberträger (18): | nicht berücksichtigt | |
| Heizer (6): | Leistung: | 5,0 kWₑₗ |
| Heizer (13): | Leistung: | 0,6 kWₑₗ |
| Elektrolysezelle (16): | Leistung: | 130,9 kWₑₗ |
| Wasserstoff (28): | Massenstrom: | 3,85 kg/h |
| | Leistung (Hu): | 127,6 kW |
| Speisewasser (47): | Massenstrom: | 9,4 kg/h |
| | Druck: | 3 bar(a) |
| | Temperatur: | 100 °C |
| Dampf (89): | Massenstrom: | 9,4 kg/h |
| | Druck: | 3 bar(a) |
| | Sattdampf | |

Der im SOFC-Modus erzeugte Dampf (90) soll in einem Ruthsspeicher (91) gespeichert werden. Der Ruthsspeicher hat ein Nutzvolumen von 1 m³ und zu Beginn der Speicherung folgenden Zustand:

| | |
|---|---|
| Druck: | 2 bar(a) |
| Füllgrad Siedewasser: | 70 % (Volumen) |
| Masse Siedewasser: | 659,8 kg |
| Masse Sattdampf: | 0,34 kg |
| Gesamtmasse Inhalt: | 660,14 kg |

Der Speicher wird bis zu einem Druck von 10 bar(a) mit Sattdampf aufgeladen und hat dann folgenden Zustand:

| | |
|---|---|
| Druck: | 10 bar(a) |
| Füllgrad Siedewasser: | 83,9 % (Volumen) |
| Masse Siedewasser: | 744,4 kg |
| Masse Sattdampf: | 0,83 kg |
| Gesamtmasse Inhalt: | 745,23 kg |

D.h. im Behälter mit 1 m³ Nutzvolumen können bei einem Anfangsfüllgrad von 70 % 85,1 kg Dampf gespeichert werden, was einer Ladezeit bei der angegebenen Dampfmenge (90) von 20,2 kg/h von ca. 4,2 Stunden (ca. 252 min) entspricht.

Die gespeicherte Dampfmenge von 85,1 kg reicht im SOEC-Modus entsprechend der benötigten Dampfleistung von -33,4 kg/h ca. 2,5 h (ca. 152,9 min).

Als H₂-Speicher wird ein Gasdruckspeicher mit einem Volumen von 5 m³ angenommen. Der untere Druck ergibt sich aus dem Systemdruck der rSOC und soll unter Beachtung von Druckverlusten bei 2 bar(a) liegen.

Der Ladedruck resultiert aus der zu speichernden H₂-Menge im SOEC-Modus von 9,81 kg (3,85 kg/h in 152,9 min) und beträgt bei 25 °C im Fall 1 ca. 25,8 bar(a).

Zur Produktion von 85,1 kg Dampf im SOFC-Modus werden aber 13,4 kg Wasserstoff benötigt. D.h. es existiert eine Wasserstoffdefizit von 3,6 kg, das in diesem Fall durch eine externe Versorgung abgesichert werden muss.

### Fall 1:

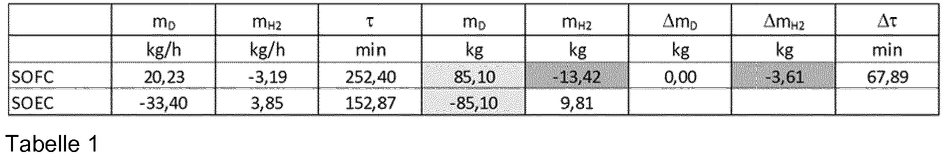

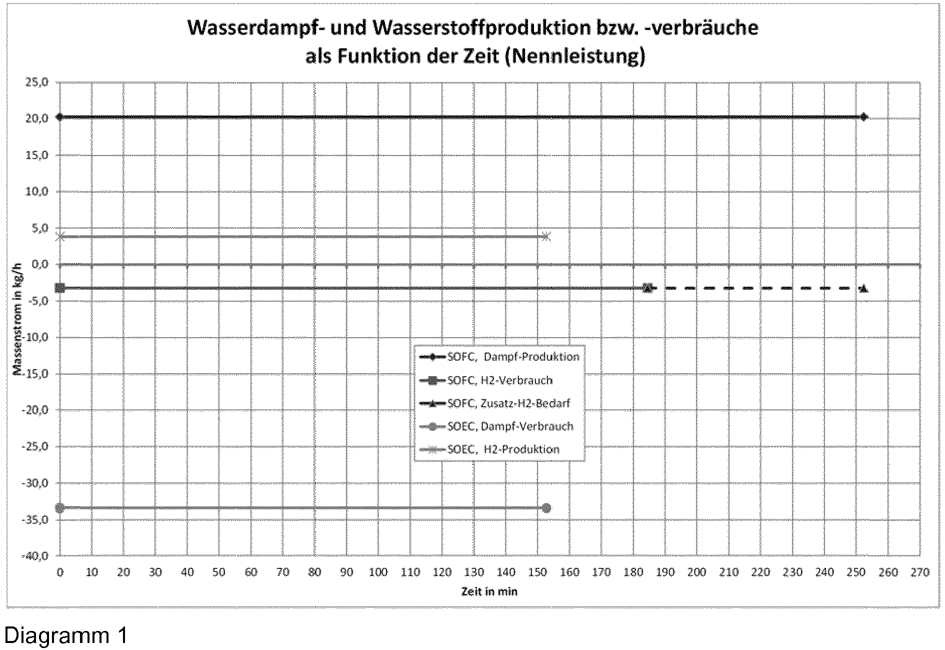

### Fall 2:

Der SOEC-Modus kann auch länger (209,1 min) betrieben werden, so dass der Wasserstoffbedarf von 13,4 kg für den anschließenden SOFC-Betrieb abgesichert wird. In diesem Fall steigt der Ladedruck im Druckgasspeicher auf 34,6 bar(a) an. Allerdings reicht dann die im Ruthsspeicher gepufferte Dampfmenge nicht mehr aus, um den Wasserstoff zu produzieren. Hier muss 31,3 kg Dampf durch eine externe Versorgung bereitgestellt werden.

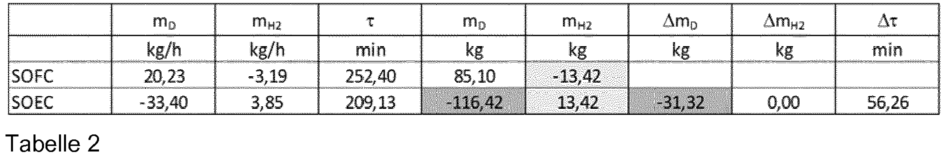

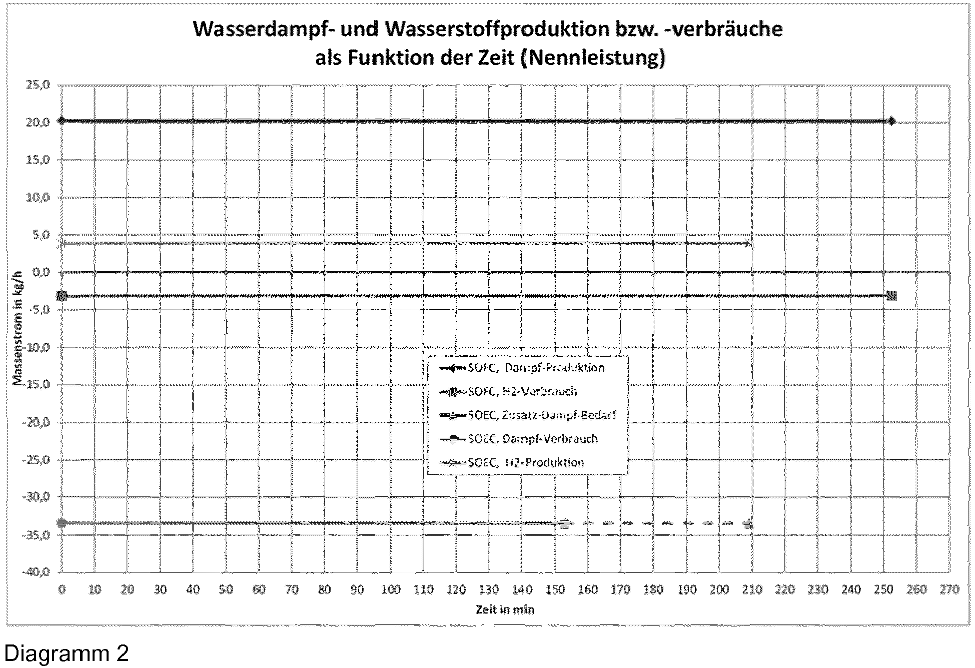

**Bezugszeichenliste**

| | | | |
|---|---|---|---|
| 1 | Wasserdampf | 28 | Wasserstoff für externe Verbraucher |
| 1a | Wasserstoff | 29 | Wasserstoffteilstrom für Zwischenspeicherung |
| 2 | rezirkulierter Wasserstoff | 30 | Verdichter |
| 3 | rekuperativer Wärmeüberträger | 31 | Wasserstoff-Druckspeicher |
| 4 | heißes Wasserstoff-Wasserdampf-Gemisch | 32 | Wasserstoff für Verbraucher |
| 5 | Elektrolysezelle | 33 | Druckregel-/Drosselventil |
| 5a | Brennstoffzelle | 34 | Luft-Sauerstoff-Gemisch |
| 6 | elektrischer Heizer | 34a | Luft-Stickstoff-Gemisch |
| 7 | Elektroenergie | 35 | Wärmeüberträger |
| 8 | heißes Wasserdampf-Wasserstoff-Gemisch | 36 | Abgas |
| 9 | Luft | 37 | Wärmeverbraucher |
| 10 | Gebläse | 38 | externer Druckdampf/Fremddampf |
| 11 | rekuperativer Wärmeüberträger | 39 | Fremddampf |
| 12 | heißes Luft-Sauerstoff-Gemisch | 40 | Wärmespeicher/Ruthsspeicher |
| 12a | heißes Luft-Stickstoff-Gemisch | 41 | Armatur/Ventil |
| 13 | elektrischer Heizer | 42 | restlicher externer Fremddampf |
| 14 | Elektroenergie | 43 | Drossel-/Regelventil |
| 15 | heiße Luft | 44 | Druckmessung |
| 16 | Elektroenergie | 45 | Drossel-/Regelventil |
| 17 | abgekühltes Wasserstoff-Wasserdampf-Gemisch | 46 | benötigter Differenzdampf |
| 18 | Wärmeüberträger | 47 | Speisewasser |
| 19 | Wärmeverbraucher | 48 | Speisewasser |
| 20 | weiter abgekühltes Wasserstoff-Wasserdampf-Gemisch | 49 | intern erzeugter Wasserdampf |
| 21 | Kühler | 50 | intern erzeugter Wasserdampf |
| 22 | Phasentrenner | 51 | Speisewasser |
| 23 | Kondensat | 52 | Regelventil |
| 24 | Wasserstoff | 53 | Dampferzeuger |
| 25 | Wasserstoff | 54 | Niedertemperatur-Wärmequelle |
| 26 | Gebläse | 55 | Verdichter/Sauggebläse |
| 27 | Wasserstoff | 56 | Druckmessung |
| | | 57 | Niederdruck-Dampf |
| | | 58 | SOEC |
| | | 59 | Verdichter/Sauggebläse |
| 60 | Verdichter/Sauggebläse | A | interne Dampfproduktion über Wärmeüberträger 35 |
| 61 | Wasserstoff | B | interne Dampfproduktion über Wärmeüberträger 18 |
| 62 | Luft-O₂-Gemisch | | |
| 63 | Regel-/Drosselventil | | |
| 64 | Wärmepumpe | | |
| 65 | Verdampfer | | |
| 66 | Kondensator | | |
| 67 | Verdichter | | |
| 68 | Drosselventil | | |
| 69 | Gasverteilerelemente | | |
| 70 | Wasserbad | | |
| 71 | Dreiwegeventil/Regelarmatur | | |
| 72 | Dreiwegeventil/Regelarmatur | | |
| 73 | Temperaturmessung | | |
| 74 | Temperaturmessung | | |
| 75 | Bypassstrom Wasserstoff | | |
| 76 | Bypassstrom Luft | | |
| 77 | Wasserstoff | | |
| 78 | Dreiwegeventil | | |
| 79 | Gastrennung | | |
| 80 | Wasserstoff | | |
| 81 | Wasserdampf/Wasserstoff-Wasserdampf | | |
| 82 | Verdichter | | |
| 83 | Gasdruckspeicher | | |
| 84 | Druckmessung | | |
| 85 | Drossel-/Regelventil | | |
| 86 | Regelventil | | |
| 87 | Wasserdampf/Wasserstoff-Wasserdampf | | |
| 88 | Dampf für externen Verbraucher | | |
| 89 | Wasserdampf | | |
| 90 | Wasserdampf | | |
| 91 | Ruthsspeicher | | |
| 92 | Wasserdampf | | |
| 93 | Drosselventil | | |

## Patentansprüche

1. Wärmemanagementverfahren einer
- Hochtemperatur-Wasserdampf-Elektrolyse [SOEC] (Fig. 1),
- Festoxidbrennstoffzelle [SOFC] (Fig. 2) mit Hochtemperatur-Wasserdampf-Elektrolyse [SOEC] (Fig. 1)
und/oder
- reversiblen Hochtemperatur-Brennstoffzelle mit den Betriebsmodi SOEC und SOFC [rSOC] (Fig. 1/2),
wobei benötigter Wasserdampf (1) aus wenigstens einer externen Quelle zugeführt wird und wenigstens ein Abgasstrom (4, 12, 12a) nach der Zelle [SOEC, SOFC, rSOC] (5, 5a) wenigstens einmal gekühlt (3, 11, 18, 35) wird,
wobei
ein internes Erzeugen von benötigtem Wasserdampf (1, 8) durch internes rekuperatives Erwärmen von extern zugeführtem Wasser (47, 48, 51) erfolgt, wobei hierzu die Energie aus der wenigstens einen Kühlung (3, 11, 18, 35) des wenigstens einen zu kühlenden Abgasstromes (4, 4a, 12, 12a, 17, 20, 34, 36) verwendet wird, und dabei die externe Dampfzuführung (1, 38) reduziert oder abgeschaltet wird,
**dadurch gekennzeichnet, dass** Wärmequellen mit Temperaturen unterhalb von 100°C (54) für die interne Wasserdampf-Produktion (1, 57) verwendet werden,
wobei entweder
a)
- eine Wasserverdampfung bei niedrigen Drücken (56) unterhalb von 1 bar durchgeführt wird, wobei
- eine anschließende Druckerhöhung (55) des hergestellten Wasserdampfes (57) auf Betriebsdruck der Elektrolyse erfolgt
oder
- eine Elektrolyse bei niedrigen Drücken (56) erfolgt, wobei die gebildeten Elektrolyseprodukte (61, 62), wenigstens Wasserstoff (61), einer Druckerhöhung (59, 60) vor der weiteren Verarbeitung zugeführt werden;
oder
b) das Temperaturniveau der Wärmequellen (54) mittels eines Wärmepumpenprozesses (64) auf ein für die Dampferzeugung für die Elektrolyse nutzbares Niveau angehoben wird;
oder
c) eine interne Kreislaufführung der Produkte nach der Zelle (5), insbesondere des Wasserstoffes (2, 4, 87), als Schleppgas zur Wasserdampf-Produktion verwendet werden.

2. Wärmemanagementverfahren nach Anspruch 1,
**dadurch gekennzeichnet, dass**
der intern rekuperativ erzeugte Wasserdampf (1, 49, 50), bevorzugt in einem Ruthsspeicher (40, 91), gespeichert wird und zeitversetzt in der SOEC oder im Prozessmodus SOEC (5) der rSOC wieder genutzt wird.

3. Wärmemanagementverfahren nach Anspruch 1 oder 2,
**dadurch gekennzeichnet, dass**
der intern rekuperativ erzeugte Wasserdampf (1, 49, 50) unmittelbar in der SOEC oder im Prozessmodus SOEC (5) der rSOC genutzt wird.

4. Wärmemanagementverfahren nach Anspruch 1, 2 oder 3,
**dadurch gekennzeichnet, dass**
Wärme aus einem Luft-Sauerstoff-Abgasstrom (12, 34, 36) und/oder aus einem Wasserstoff- und/oder Wasserdampf-Gasstrom (4, 4a, 17, 20) rekuperativ zur Wasserdampferzeugung (49, 50) genutzt wird.

5. Wärmemanagementverfahren nach einem der vorangehenden Ansprüche,
**dadurch gekennzeichnet, dass**
eine zusätzliche rekuperative Erwärmung von Luft (9) und/oder Wasserstoff (1a, 2) mit größer dimensionierten Rekuperatoren (3, 11) erfolgt, wobei ein Bypassstrom der Luft (76) und/oder des Wasserstoffes (75) Temperatur-geregelt (73, 74) um den/die größer dimensionierten Rekuperatoren (3, 11) geführt ist.

6. Hochtemperatur-Wasserdampf-Elektrolyse [SOEC], Festoxidbrennstoffzelle [SOFC] mit Hochtemperatur-Wasserdampf-Elektrolyse [SOEC] und/oder reversible Hochtemperatur-Brennstoffzelle mit den Betriebsmodi SOEC und SOFC [rSOC] -anordnung geeignet zur Ausführung eines Verfahrens nach einem der vorangehenden Ansprüche, jeweils aufweisend:
- Elektrolyse-/Brennstoffzelle (5, 5a),
- zwei Gaszufuhrleitungen (8, 15),
- zwei Gasabfuhrleitungen (4, 12/12a)
wobei
wenigstens eine Wasserverdampfungsanordnung (53), ein Dampferzeuger und/oder Wärmetauscher (3,11, 18, 35) zur Wasserdampferzeugung in wenigstens einer Gasabfuhrleitung (4, 12, 12a) angeordnet ist, um Wasserdampf (1, 8, 49, 50, 57) zu erzeugen,
**dadurch gekennzeichnet, dass**
eine Wasserverdampfungsanordnung (53, 70) mit einer Wärmezufuhr mit Niedertemperatur (54) aus der SOEC, SOFC und/oder rSOC vorgesehen ist, wobei entweder
a)
- der Druck (56) bei einer darin stattfindenden Wasserdampferzeugung unter 1 bar beträgt, wobei
- nach der Wasserverdampfungsanordnung (53) ein Verdichter (55) vorgesehen ist, der den Druck des erzeugten Wasserdampfes (57) auf Prozessdruck erhöht
oder
- der Druck in der nachfolgenden Elektrolysezelle [SOEC] (5), in der der hergestellte Wasserdampf (57) verwendet werden soll, unter 1 bar beträgt und das nach der Elektrolysezelle [SOEC] (5) wenigstens ein Verdichter (59, 60) vorgesehen ist, der den Druck des und/oder der erhaltenen Elektrolysegase (61, 62) auf wenigstens Umgebungsdruck erhöht;
oder
b)
- eine Wärmepumpenanordnung (64) vorgesehen ist, wobei diese Niedertemperaturwärme mit T<100°C (54) unter Energieeinsatz auf ein höheres Temperaturniveau zur Verwendung als Wärme für eine Wasserverdampfung (53, 1) bei Prozessdruck der SOEC oder der rSOC bringt.

7. SOEC, SOFC und/oder rSOC nach Anspruch 6,
**dadurch gekennzeichnet, dass**
die Wasserverdampfungsanordnung (18, 35, 53, 70), der Dampferzeuger und/oder der Wärmetauscher zur Wasserdampferzeugung in wenigstens einer Gasabfuhrleitung (4, 12, 12a) stromabwärts nach einem rekuperativen Vorwärmer (3, 11) zur Vorwärmung von an die Elektrolyse-/Brennstoffzelle (5, 5a) zuzuführendem Gas (8, 15) angeordnet ist.

8. SOEC, SOFC und/oder rSOC nach Anspruch 6 oder 7,
**dadurch gekennzeichnet, dass**
ein Wärmespeicher, ein Ruthsspeicher (40, 91), ein Gasdruckspeicher mit vorgeschaltetem Verdichter (83), ein Hochtemperaturspeicher, ein Latentwärmespeicher und/oder ein thermochemischer Wärmespeicher zur Speicherung von erzeugtem Wasserdampf (1, 39, 49, 50, 57) vorgesehen ist.

9. SOEC, SOFC und/oder rSOC nach einem der Ansprüche 6 bis 8,
**dadurch gekennzeichnet, dass**
ein Wasserstoffspeicher (31, 83), Gasdruckspeicher zur internen Speicherung von Wasserstoff (29, 77, 81, 87, 1a) und/oder Wasserdampf vorgesehen ist.

10. SOEC, SOFC und/oder rSOC nach einem der Ansprüche 6 bis 9,
**dadurch gekennzeichnet, dass**
die Anlage Bestandteil einer Kohlenwasserstoffsynthetisierungsanlage, insbesondere im Synthetisierungsvorgang mit regenerativ hergestellter Elektroenergie arbeitend, ist, wobei der externe Wasserdampf (1, 38) überwiegend von der Kohlenwasserstoffsynthetisierungsanlage stammt.

## Claims

1. Heat management method of a
- high-temperature steam electrolysis [SOEC] (Fig. 1),
- solid oxide fuel cell [SOFC] (Fig. 2) having high-temperature steam electrolysis [SOEC] (Fig. 1)
and/or
- reversible high-temperature fuel cell having SOEC and SOFC modes [rSOC] (Fig. 1/2), wherein required steam (1) is supplied from at least one external source and at least one exhaust gas stream (4, 12, 12a) downstream of the cell [SOEC, SOFC, rSOC] (5, 5a) is cooled (3, 11, 18, 35) at least once,
wherein
required steam (1, 8) is generated internally by the internal recuperative heating of externally supplied water (47, 48, 51), wherein the energy from the at least one cooling (3, 11, 18, 35) of the at least one exhaust gas stream (4, 4a, 12, 12a, 17, 20, 34, 36) to be cooled is used for this purpose, and in the process the external steam supply (1, 38) is reduced or switched off,
**characterised in that** heat sources at temperatures of less than 100°C (54) are used for the internal steam production (1, 57),
wherein either
a)
- water is evaporated at low pressures (56) of less than 1 bar, wherein
- the pressure of the produced steam (57) is subsequently increased (55) to the operating pressure of the electrolysis
or
- electrolysis is carried out at low pressures (56), wherein the electrolysis products (61, 62) formed, at least hydrogen (61), are conveyed to a pressure increase (59, 60) prior to further processing;
or
b) by means of a heat pumping process (64), the temperature level of the heat sources (54) is raised to a level that is useful for the steam generation for the electrolysis;
or
c) an internal recirculation of the products downstream of the cell (5), in particular the hydrogen (2, 4, 87), is used as a carrier gas for steam production.

2. Heat management method according to claim 1,
**characterised in that**
the internally recuperatively generated steam (1, 49, 50) is stored, preferably in a Ruth's steam accumulator (40, 91), and reused later in the SOEC or in the SOEC process mode (5) of the rSOC.

3. Heat management method according to either claim 1 or claim 2,
**characterised in that**
the internally recuperatively generated steam (1, 49, 50) is used immediately in the SOEC or in the SOEC process mode (5) of the rSOC.

4. Heat management method according to claim 1, 2 or 3,
**characterised in that**
heat from an air-oxygen exhaust gas stream (12, 34, 36) and/or from a hydrogen and/or steam gas stream (4, 4a, 17, 20) is used recuperatively for steam generation (49, 50).

5. Heat management method according to any of the preceding claims,
**characterised in that**
air (9) and/or hydrogen (1a, 2) is/are additionally recuperatively heated using larger-size recuperators (3, 11), wherein a bypass stream of the air (76) and/or the hydrogen (75) is conducted around the larger-size recuperator(s) (3, 11) in a temperature-controlled (73, 74) manner.

6. Arrangement of a high-temperature steam electrolysis [SOEC],
solid oxide fuel cell [SOFC] having high-temperature steam electrolysis [SOEC]
and/or
reversible high-temperature fuel cell having the SOEC and SOFC modes [rSOC] suitable for carrying out a method according to any of the preceding claims,
in each case comprising:
- an electrolysis fuel cell (5, 5a),
- two gas supply lines (8, 15),
- two gas removal lines (4, 12/12a),
wherein
at least one water evaporation arrangement (53), a steam generator and/or heat exchanger (3, 11, 18, 35) for steam generation is/are arranged in at least one gas removal line (4, 12, 12a) in order to generate steam (1, 8, 49, 50, 57),
**characterised in that**
a water evaporation arrangement (53, 70) having a heat supply at low temperature (54) from the SOEC, SOFC and/or rSOC is provided, wherein
either
a)
- the pressure (56) is less than 1 bar for steam generation taking place therein, wherein
- a compressor (55) is provided downstream of the water evaporation arrangement (53) and increases the pressure of the generated steam (57) to process pressure
or
- the pressure in the subsequent electrolysis cell [SOEC] (5), in which the produced steam (57) is to be used, is less than 1 bar, and at least one compressor (59, 60) is provided downstream of the electrolysis cell [SOEC] (5) and increases the pressure of the obtained electrolysis gas and/or gases (61, 62) to at least ambient pressure;
or
b)
- a heat pump arrangement (64) is provided, wherein this arrangement brings the low-temperature heat at T<100°C (54) to a higher temperature level, with the input of energy, for use as heat for water evaporation (53, 1) at the process pressure of the SOEC or rSOC.

7. SOEC, SOFC and/or rSOC according to claim 6,
**characterised in that**
the water evaporation arrangement (18, 35, 53, 70), the steam generator and/or the heat exchanger for steam generation is/are arranged in at least one gas removal line (4, 12, 12a) downstream of a recuperative pre-heater (3, 11) for pre-heating gas (8, 15) that is to be supplied to the electrolysis cell/fuel cell (5, 5a).

8. SOEC, SOFC and/or rSOC according to either claim 6 or claim 7,
**characterised in that**
a heat accumulator, a Ruth's steam accumulator (40, 91), a gas pressure accumulator having an upstream compressor (83), a high-temperature accumulator, a latent heat accumulator and/or a thermochemical heat accumulator is/are provided for storing generated steam (1, 39, 49, 50, 57).

9. SOEC, SOFC and/or rSOC according to any of claims 6 to 8,
**characterised in that**
a hydrogen accumulator (31, 83) and a gas pressure accumulator for internally storing hydrogen (29, 77, 81, 87, 1a) and/or steam are provided.

10. SOEC, SOFC and/or rSOC according to any of claims 6 to 9,
**characterised in that**
the system is a component of a hydrocarbon synthesis system, in particular in the synthesis process using regeneratively produced electrical energy, wherein the external steam (1, 38) originates predominantly from the hydrocarbon synthesis system.

## Revendications

1. Procédé de gestion de la chaleur
- d'une électrolyse de vapeur d'eau à haute température [SOEC] (Fig. 1),
- d'une pile à combustible à oxyde solide [SOFC] (Fig. 2) à électrolyse de vapeur d'eau à haute température [SOEC] (Fig. 1)
et/ou
- d'une pile à combustible réversible à haute température fonctionnant en mode SOEC et SOFC [rSOC] (Fig. 1/2),
la vapeur d'eau nécessaire (1) étant fournie par au moins une source externe et au moins un effluent gazeux (4, 12, 12a) étant refroidi au moins une fois (3, 11, 18, 35) après la cellule [SOEC, SOFC, rSOC] (5, 5a),
procédé dans lequel
une production interne de vapeur d'eau nécessaire (1, 8) est réalisée par chauffage récupératif interne de l'eau fournie de l'extérieur (47, 48, 51), l'énergie provenant dudit au moins un refroidissement (3, 11, 18, 35) dudit au moins un effluent gazeux à refroidir (4, 4a, 12, 12a, 17, 20, 34, 36) étant pour cela utilisée, et, ce faisant, la fourniture externe de vapeur (1, 38) étant réduite ou interrompue,
**caractérisé en ce que**
des sources de chaleur ayant des températures inférieures à 100°C (54) sont utilisées pour la production interne de vapeur d'eau (1, 57),
procédé dans lequel soit
a)
- une vaporisation de l'eau est réalisée à basse pression (56) inférieure à 1 bar, dans laquelle
- il est réalisé une augmentation ultérieure de la pression (55) de la vapeur d'eau produite (57) à la pression de service de l'électrolyse,
ou
- une électrolyse est réalisée à basse pression (56), les produits d'électrolyse formés (61, 62), au moins l'hydrogène (61), étant conduits à une augmentation de pression (59, 60) avant un traitement ultérieur ;
ou
b) le niveau de température des sources de chaleur (54) est augmenté au moyen d'un procédé de pompe à chaleur (64) à un niveau utilisable pour la production de vapeur d'eau pour l'électrolyse ;
ou
c) une mise en circulation interne des produits après la cellule (5), en particulier de l'hydrogène (2, 4, 87), est utilisée comme gaz porteur vers la production de vapeur d'eau.

2. Procédé de gestion de la chaleur selon la revendication 1,
**caractérisé en ce que**
la vapeur d'eau produite de manière récupérative en interne (1, 49, 50) est stockée, de préférence dans un accumulateur de type Ruth (40, 91), et est réutilisée avec un décalage dans le temps dans la SOEC ou dans le mode de procédé SOEC (5) de la rSOC.

3. Procédé de gestion de la chaleur selon la revendication 1 ou 2,
**caractérisé en ce que**
la vapeur d'eau produite de manière récupérative en interne (1, 49, 50) est utilisée directement dans la CCEOS ou dans le mode de procédé SOEC (5) de la rSOC.

4. Procédé de gestion de la chaleur selon la revendication 1, 2 ou 3,
**caractérisé en ce que**
de la chaleur provenant d'un effluent gazeux air-oxygène (12, 34, 36) et/ou d'un flux de gaz hydrogène et/ou vapeur d'eau (4, 4a, 17, 20) est utilisée de manière récupérative pour la génération de vapeur d'eau (49, 50).

5. Procédé de gestion de la chaleur selon l'une des revendications précédentes,
**caractérisé en ce qu'**
un chauffage récupératif supplémentaire de l'air (9) et/ou de l'hydrogène (1a, 2) est réalisé avec des récupérateurs de plus grande dimension (3, 11), un flux dérivé de l'air (76) et/ou de l'hydrogène (75) régulé en température (73, 74) étant conduit autour du ou des récupérateurs de plus grande dimension (3, 11).

6. Électrolyse de vapeur d'eau à haute température [SOEC],
pile à combustible à oxyde solide [SOFC] à électrolyse de vapeur d'eau à haute température [SOEC]
et/ou
pile à combustible réversible à haute température fonctionnant en mode SOEC et SOFC [rSOC]
- dispositif apte à la mise en œuvre d'un procédé selon l'une des revendications précédentes,
chacun d'entre eux comprenant :
- une cellule à électrolyse/à combustible (5, 5a),
- deux conduites d'alimentation en gaz (8, 15),
- deux conduites d'évacuation de gaz (4, 12/12a)
dans lequel
au moins un dispositif de vaporisation de l'eau (53), un générateur de vapeur et/ou un échangeur de chaleur (3, 11, 18, 35) pour générer de la vapeur d'eau est disposé dans au moins une conduite d'évacuation de gaz (4, 12, 12a) pour générer de la vapeur d'eau (1, 8, 49, 50, 57),
**caractérisé en ce que**
il est prévu un dispositif de vaporisation d'eau (53, 70) avec un apport de chaleur à basse température (54), provenant de la SOEC, de la SOFC et/ou de la rSOC,
dans lequel soit
a)
- la pression (56) est inférieure à 1 bar lors d'une vaporisation de l'eau réalisée dedans, où
- il est prévu, après le dispositif de vaporisation de l'eau (53), un compresseur (55) qui augmente la pression de la vapeur d'eau générée (57) à la pression de service,
ou
- la pression dans la cellule d'électrolyse suivante [SOEC] (5), dans laquelle la vapeur produite (57) doit être utilisée, est inférieure à 1 bar, et il est prévu, en aval de la cellule d'électrolyse [SOEC] (5), au moins un compresseur (59, 60) qui augmente la pression du ou des gaz d'électrolyse obtenus (61, 62) à au moins la pression environnante ;
ou
b)
- il est prévu un ensemble de pompe à chaleur (64) qui amène une chaleur à basse température avec T < 100 °C (54) à un niveau de température plus élevé avec apport d'énergie pour l'utilisation comme chaleur pour une vaporisation de l'eau (53, 1) à la pression de service de la SOEC ou de la rSOC.

7. SOEC, SOFC et/ou rSOC selon la revendication 6,
**caractérisé en ce que**
le dispositif de vaporisation de l'eau (18, 35, 53, 70), le générateur de vapeur et/ou l'échangeur de chaleur pour la production de vapeur d'eau est disposé dans au moins une conduite d'évacuation de gaz (4, 12, 12a) en aval d'un préchauffeur récupératif (3, 11) pour préchauffer du gaz (8, 15) à conduite à la cellule d'électrolyse/de combustible (5, 5a).

8. SOEC, SOFC et/ou rSOC selon la revendication 6 ou 7,
**caractérisé en ce que**
il est prévu un accumulateur de chaleur, un accumulateur de type Ruth (40, 91), un accumulateur de pression de gaz avec compresseur en amont (83), un accumulateur haute température, un accumulateur de chaleur latente et/ou un accumulateur de chaleur thermochimique pour stocker la vapeur d'eau produite (1, 39, 49, 50, 57).

9. SOEC, SOFC et/ou rSOC selon l'une des revendications 6 à 8,
**caractérisé en ce que**
il est prévu un accumulateur d'hydrogène (31, 83), un accumulateur de pression de gaz pour le stockage interne d'hydrogène (29, 77, 81, 87, 1a) et/ou de vapeur d'eau.

10. SOEC, SOFC et/ou rSOC selon l'une des revendications 6 à 9,
**caractérisé en ce que**
l'installation fait partie d'une installation de synthèse d'hydrocarbures, en particulier fonctionnant dans le procédé de synthèse avec de l'énergie électrique produite de façon régénérative, la vapeur d'eau externe (1, 38) provenant principalement de l'installation de synthèse d'hydrocarbures.
